# EUROPEAN PATENT APPLICATION

(11) **EP 4 821 995 A1**
(43) Date of publication of application: **14.10.2026**
(21) Application number: 24900479.7
(22) Date of filing: 25.11.2024
(51) Int. Cl.: C09D 163/00, C09D 5/02, C09D 5/08

(54) **ANTICORROSION COATING COMPOSITION KIT, METHOD FOR PRODUCING ANTICORROSION COATING COMPOSITION, ANTICORROSION COATING FILM, SUBSTRATE WITH ANTICORROSION COATING FILM, AND METHOD FOR MANUFACTURING SUBSTRATE WITH ANTICORROSION COATING FILM**

(30) Priority: 06.12.2023 JP 2023205883
(71) Applicant: Chugoku Marine Paints, Ltd., Hiroshima 739-0652 (JP)
(72) Inventor: URANO, Kazuki, Otake-shi, Hiroshima 739-0652 (JP); SHIMIZU, Akino, Otake-shi, Hiroshima 739-0652 (JP); HARADA, Shotaro, Otake-shi, Hiroshima 739-0652 (JP); OKADA, Masamitsu, Otake-shi, Hiroshima 739-0652 (JP)
(74) Representative: Hoffmann Eitle
(86) International application number: PCT/JP2024/041597
(87) International publication number: WO 2025/121185

(57) **Abstract**

An embodiment of the present invention relates to an anticorrosive coating composition kit, a method for producing an anticorrosive coating composition, an anticorrosive coating film, a substrate with an anticorrosive coating film, or a method for producing a substrate with an anticorrosive coating film, and the anticorrosive coating composition kit includes a first agent containing a non-aqueous epoxy compound (A) and a second agent containing an amine compound-containing water-dilutable component (B), an amine compound-containing non-aqueous component (C), a pigment (D), and water.

## Description

### Technical Field

An embodiment of the present invention relates to an anticorrosive coating composition kit, a method for producing an anticorrosive coating composition, an anticorrosive coating film, a substrate with an anticorrosive coating film, or a method for producing a substrate with an anticorrosive coating film.

### Background Art

Solvent-based epoxy resin anticorrosive coating materials have been conventionally applied to substrates such as ships, marine structures, plants, bridges, and onshore tanks, for the purpose of using these for a long period of time.

In recent years, with the tightening of emission control of organic solvents for the purpose of considering, for example, natural environments and coating work environments, the reduction of a volatile organic compound (VOC) of the solvent-based coating material as described above has progressed. As one of the methods of reducing VOC, the water-based production of coating materials can be mentioned. Since a water-based anticorrosive coating material mainly uses water as a solvent and a dispersion medium, it is possible to significantly reduce VOC as compared with the conventional solvent-based coating material while maintaining the coating material viscosity appropriately.

As the water-based anticorrosive coating material as described above, for example, Patent Literature 1 discloses an aqueous epoxy resin composition containing an epoxy resin emulsion and a water-soluble amine curing agent, and Patent Literature 2 discloses a two-liquid-type water-based epoxy resin composition containing, for example, an epoxy resin emulsion and an amine compound emulsion.

However, an anticorrosive coating film formed from the conventional water-based anticorrosive coating material described in, for example, Patent Literatures 1 and 2 does not have sufficient anticorrosive performance, and there is room for improvement in this respect.

As an anticorrosive coating composition with the improved anticorrosive performance, Patent Literature 3 discloses a kit for an anticorrosive coating composition, the kit including a first agent containing a non-aqueous epoxy compound and a second agent containing an amine compound-containing water-dilutable component and an amine compound-containing non-aqueous component.

### Citation List

### Patent Literatures

Patent Literature 1: JP 2008-247958 A
Patent Literature 2: JP 2016-186021 A
Patent Literature 3: JP 2022-154829 A

### Summary of Invention

The present inventors have conducted intensive studies, and as a result, have found that the second agent in the kit described in Patent Literature 3 has room for improvement in terms of storage stability, and the anticorrosive coating composition described in Patent Literature 3 has room for improvement in terms of spray coating workability, particularly atomization property during spray coating application.

An embodiment of the present invention provides an anticorrosive coating composition kit including a second agent excellent in storage stability, capable of obtaining an anticorrosive coating composition excellent in spray coating workability, particularly atomization property during spray coating application, and capable of forming an anticorrosive coating film excellent in anticorrosion property.

### Solution to Problem

A configuration example of the present invention is as follows.
[1] An anticorrosive coating composition kit including:
   a first agent containing a non-aqueous epoxy compound (A); and
   a second agent containing an amine compound-containing water-dilutable component (B), an amine compound-containing non-aqueous component (C), a pigment (D), and water.
[2] The kit according to [1], wherein the second agent contains a viscosity adjusting agent.
[3] The kit according to [1] or [2], wherein the second agent contains a divalent or higher polyvalent carboxylic acid.
[4] The kit according to any one of [1] to [3], wherein a content of water in the second agent is 10 to 50 mass%.
[5] The kit according to any one of [1] to [4], wherein a pigment volume concentration (PVC) of the second agent is 35 to 75%.
[6] The kit according to any one of [1] to [5], which is for spray coating.
[7] A method for producing an anticorrosive coating composition, the method including:
   a step 1 of preparing a first agent using a non-aqueous epoxy compound (A);
   a step 2 of preparing a second agent containing water using an amine compound-containing water-dilutable component (B), an amine compound-containing non-aqueous component (C), and a pigment (D); and
   a step 3 of mixing the first agent and the second agent.
[8] An anticorrosive coating film formed using the kit according to any one of [1] to [6].
[9] A substrate with an anticorrosive coating film, including a substrate and the anticorrosive coating film according to [8].
[10] A method for producing a substrate with an anticorrosive coating film, the method including the following steps I and II:
   a step I: a step of applying an anticorrosive coating composition obtained using the kit according to any one of [1] to [6] to a substrate; and
   a step II: a step of drying the anticorrosive coating composition applied onto the substrate to form an anticorrosive coating film.
[11] The method for producing a substrate with an anticorrosive coating film according to [10], wherein applying in the step I is spray coating application.

### Advantageous Effects of Invention

According to an embodiment of the present invention, it is possible to obtain an anticorrosive coating composition containing a second agent excellent in storage stability and excellent in spray coating workability, particularly atomization property during spray coating application, and to form an anticorrosive coating film excellent in anticorrosion property, particularly anticorrosion property under salt spray and under high temperature and high humidity.

According to an embodiment of the present invention, it is possible to obtain an anticorrosive coating composition which has a long pot life after mixing the first agent and the second agent, and is less likely to cause a decrease in spray coating workability over time, particularly atomization property during spray coating application.

As a method for improving the efficiency of the coating work, such as reduction in the number of times of coating application for forming an anticorrosive coating film having a predetermined film thickness, it is effective to make the coating material high-solid, but in the conventional anticorrosive coating material, the coating workability is deteriorated due to high viscosity associated with high-solids. That is, in the conventional anticorrosive coating material, there is a trade-off relationship between high-solids and coating workability, and it is difficult to achieve both of them.

On the other hand, according to an embodiment of the present invention, it is possible to obtain an anticorrosive coating composition that is high-solid but is excellent in coating workability, particularly spray coating workability, and it is possible to obtain an anticorrosive coating composition that is excellent in dryness, is less likely to cause sagging during coating application, can form a thick film by one coating application, and has less adverse effects on the natural environment and coating workers.

### Brief Description of Drawings

Fig. 1 is a photograph of a spray state during spray coating application corresponding to Evaluation Criteria 5 of an atomization property test in the following Examples.
Fig. 2 is a photograph of a spray state during spray coating application corresponding to Evaluation Criteria 4 of an atomization property test in the following Examples.
Fig. 3 is a photograph of a spray state during spray coating application corresponding to Evaluation Criteria 3 of an atomization property test in the following Examples.
Fig. 4 is a photograph of a spray state during spray coating application corresponding to Evaluation Criteria 2 of an atomization property test in the following Examples.
Fig. 5 is a photograph of a spray state during spray coating application corresponding to Evaluation Criteria 1 of an atomization property test in the following Examples.

### Description of Embodiments

### <<Anticorrosive Coating Composition Kit (Kit for Anticorrosive Coating Composition)>>

A kit (hereinafter, also referred to as "present kit") for anticorrosive coating composition according to an embodiment of the present invention (hereinafter, also referred to as "present composition") includes:
a first agent containing a non-aqueous epoxy compound (A); and
a second agent containing an amine compound-containing water-dilutable component (B), an amine compound-containing non-aqueous component (C), a pigment (D), and water.

Since the pigment causes separation, sedimentation, and aggregates, it is usual not to blend the pigment in order to improve the storage stability of a composition which is inferior in storage stability.

On the other hand, according to the present kit, although the reason is not clear, it has been found that by blending the pigment (D) in a specific second agent, a second agent excellent in storage stability can be obtained, and further, an anticorrosive coating composition having a long pot life can be obtained.

It is known that the pigment may adversely affect spray coating workability, particularly atomization property during spray coating application, but according to the present kit, although the reason is not clear, it has also been found that an anticorrosive coating composition excellent in spray coating workability, particularly atomization property during spray coating application, can be obtained by blending the pigment (D) in a specific second agent.

That is, it can be said that the present invention that has solved the problems of improving the storage stability and improving the spray coating workability, particularly the atomization property during spray coating application by means of solutions that are not usually performed is an invention that cannot be conceived by those skilled in the art.

The present kit can obtain the present composition by mixing the first agent and the second agent.

When the present composition is obtained from the present kit, an n-th agent (n is 3 or more) other than the first agent and the second agent may be used as necessary, but it is preferable not to use the n-th agent. That is, the present kit may be a kit for the present composition of two- or more component type, but is preferably a kit for the present composition of two-component type (a kit (only) composed of the first agent and the second agent).

For example, the first agent and the second agent constituting the present kit are usually, for instance, preserved, stored, and transported in separate containers, and then used by being mixed together immediately before use of the present composition.

The first agent is preferably prepared in the following step 1.

The second agent is preferably prepared in the following step 2.

### <<Method for Producing Anticorrosive Coating Composition>>

A method for producing an anticorrosive coating composition according to an embodiment of the present invention (hereinafter, also referred to as "present method") is a method for producing the present composition, the method including:
a step 1 of preparing a first agent using a non-aqueous epoxy compound (A);
a step 2 of preparing a second agent containing water using an amine compound-containing water-dilutable component (B), an amine compound-containing non-aqueous component (C), and a pigment (D); and
a step 3 of mixing the first agent and the second agent.

The present method may include a step of preparing an n-th agent (n is 3 or more), and in this case, the step 3 may be a step of mixing the first agent, the second agent, and the n-th agent.

### <Step 1>

The step 1 is a step of preparing a first agent using a non-aqueous epoxy compound (A).

The step 1 is not particularly limited as long as the non-aqueous epoxy compound (A) is used, and may be a step of using the non-aqueous epoxy compound (A) itself as the first agent (in this case, it can be said that the step 1 is a step of using the non-aqueous epoxy compound (A)) or a step of mixing the non-aqueous epoxy compound (A) and the following other components, but the latter is preferable.

The step 1 of mixing the non-aqueous epoxy compound (A) and the following other components is specifically a step of mixing (or kneading) the respective components to be blended in the first agent, and at the time of mixing (or kneading), the respective components may be added and mixed at a time, or may be added and mixed in plural times.

For the mixing (or kneading), for example, a conventionally known device such as a mixer, a disperser, or a stirrer can be used, and examples of the device include a disperser, a mixing/dispersing mill, a mortar mixer, a roll, a paint shaker, and a homogenizer. Note that the mixing (or kneading) may be performed while performing, for example, heating or cooling according to, for example, the season and the environment.

In the step 1, water may be used, or water may not be used. That is, the first agent may or may not contain water. An embodiment of the first agent is a solvent-based agent.

When the first agent contains water, the content of the water is preferably less than the amount in which the first agent can be an emulsion of the non-aqueous epoxy compound (A), and specifically, is preferably 20 mass% or less more preferably 10 mass% or less with respect to 100 mass% of the non-aqueous epoxy compound (A) in the first agent.

### [Non-Aqueous Epoxy Compound (A)]

The first agent contains the non-aqueous epoxy compound (A), and the present method uses the non-aqueous epoxy compound (A) as the first agent.

The non-aqueous epoxy compound (A) used in the first agent may be of one type or two or more types.

The term "non-aqueous" in the non-aqueous epoxy compound (A) refers to a state of not being freely miscible with water and a state of being substantially insoluble in water. The "non-aqueous" can also be said to be a non-aqueous dispersion type.

Specifically, when a mixed liquid obtained by mixing an epoxy compound and water at 23°C so that the amount of the epoxy compound is 3 mass%, sufficiently stirring the mixture, and allowing the mixture to stand still at 23°C for 1 hour is not in a uniform state, and 90 mass% or more of the epoxy compound mixed with water is separated, precipitated, or suspended, the epoxy compound is defined as the non-aqueous epoxy compound (A).

Note that, when more than 10 mass% of the epoxy compound mixed with water is stably present in water in the mixed liquid and the mixed liquid is maintained in an emulsion state, the epoxy compound is defined as a water-dilutable epoxy compound. When more than 10 mass% of the epoxy compound mixed with water is stably present in water in the mixed liquid and the epoxy compound mixed with water is present in a state of having an average particle size of less than 10 nm measured by a laser diffraction particle size distribution measuring apparatus (e.g.: Mastersizer 3000 (manufactured by Spectris Co., Ltd.)), the epoxy compound is defined as a water-soluble epoxy compound.

The non-aqueous epoxy compound (A) is preferably a liquid epoxy compound that is a liquid (has fluidity) at normal temperature (e.g.: 15 to 25°C). Such a liquid epoxy compound is easy to be uniformly dispersed in the first agent even when the first agent is an agent having a relatively small solvent amount and an agent containing a component other than the non-aqueous epoxy compound (A), and is also excellent in reactivity with the water-dilutable component (B) and the non-aqueous component (C) described later, which is preferable.

As the non-aqueous epoxy compound (A), a solid or semi-solid epoxy compound at normal temperature (e.g.: 15 to 25°C) may be used, and in an embodiment of the present invention, the liquid epoxy compound and the solid or semi-solid epoxy compound are preferably used in combination.

The viscosity of the non-aqueous epoxy compound (A) at 25°C as measured with an E-type viscometer (FMD type, manufactured by TOKIMEC INC., rotation speed: 60 rpm) is preferably 1,500 mPa·s or more, more preferably 3,000 mPa·s or more, and preferably 120,000 mPa·s or less and more preferably 30,000 mPa·s or less.

Examples of the non-aqueous epoxy compound (A) include a bisphenol A type epoxy resin, a bisphenol F type epoxy resin, a glycidyl ester type epoxy resin, a glycidyl amine type epoxy resin, a novolac type epoxy resin, a cresol type epoxy resin, a dimer acid-modified epoxy resin, an aliphatic epoxy resin, an alicyclic epoxy resin, and an epoxidized oilbased epoxy resin.

As the non-aqueous epoxy compound (A), from the viewpoint that, for example, an anticorrosive coating film excellent in anticorrosion property and adhesion to a substrate can be easily formed, a bisphenol A type or bisphenol F type epoxy resin is preferable, and from the viewpoint that, for example, an anticorrosive coating composition excellent in spray coating workability, particularly atomization property during spray coating application can be easily obtained, a bisphenol F type epoxy resin is preferable.

The number average molecular weight of the non-aqueous epoxy compound (A) is preferably 1000 or less and more preferably 500 or less from the viewpoint that, for example, an anticorrosive coating composition that is high-solid but is excellent in coating workability can be easily obtained.

As the non-aqueous epoxy compound (A), a compound synthesized by a conventionally known method may be used, or commercially available products may be used.

Examples of the commercially available products include "E-028" (manufactured by OHTAKE-MEISHIN CHEMICAL, CO., LTD.), "jER 828" (manufactured by Mitsubishi Chemical Corporation), "Cardura E10P" (manufactured by Hexion), and "ADEKA RESIN EP-4901" (manufactured by ADEKA Corporation) as those which are liquid at normal temperature (e.g.: 15 to 25°C); "jER 834" (manufactured by Mitsubishi Chemical Corporation) and "EPICLON860" (manufactured by DIC Corporation) as those which are semi-solid at normal temperature; and "EPICLON1050" (manufactured by DIC Corporation) and "Epotohto YD-011" (manufactured by Kukudo Chemicals Co., Ltd.) as those which are solid at normal temperature.

The use amount of the solid content of the non-aqueous epoxy compound (A) in step 1 (the content of the solid content of the non-aqueous epoxy compound (A) in the first agent) is preferably such an amount that falls within the following range.

The use amount of the solid content of the non-aqueous epoxy compound (A) is preferably 15 to 35 mass% and more preferably 18 to 30 mass% with respect to 100 mass% of the nonvolatile content of the present composition.

The use amount of the solid content of the non-aqueous epoxy compound (A) is preferably 40 to 90 mass% and more preferably 45 to 85 mass% with respect to 100 mass% of solid content of the first agent.

When the content of the non-aqueous epoxy compound (A) is in the above range, an anticorrosive coating film excellent in anticorrosion property and adhesion to a substrate can be easily formed.

### [Other Components]

In the step 1, as desired, as long as the effect of the present invention is not impaired, components other than the non-aqueous epoxy compound (A), for example, other components such as a reactive diluent, a plasticizer, a silane coupling agent, a pigment, a (pigment) dispersant, an antifoaming agent, a viscosity adjusting agent (anti-sagging agent, anti-settling agent, thixotropic agent), a flash rust inhibitor, a curing accelerator, a dehydrating agent, a film-forming aid, and an organic solvent may be used (the first agent may contain the other components).

As each of these other components, one type may be used, or two or more types may be used.

As the other components, a conventionally known component can be used, and examples of the pigment, the (pigment) dispersant, and the viscosity adjusting agent include components similar to the components described in the section of the following second agent.

As the other components, commercially available products may be used, and in this case, as the commercially available products, products for solvent-based and water-based may be commercially available; however, in the case of using a commercially available product for solvent-based, the commercially available product is preferably blended in the first agent, and in the case of using a commercially available product for water-based, the commercially available product is preferably blended in the second agent.

### <Reactive Diluent>

The present composition (present kit) may contain a reactive diluent. From the viewpoint that, for example, the present composition having a low viscosity can be easily obtained, it is preferable to contain a reactive diluent. The reactive diluent is preferably an epoxy group-containing reactive diluent. In the case of using a reactive diluent, which has reactivity with respect to the water-dilutable component (B) or the non-aqueous component (C), such as an epoxy group-containing reactive diluent, the reactive diluent is preferably blended in the first agent.

As the reactive diluent, one type may be used or two or more types may be used.

The epoxy group-containing reactive diluent is a compound other than the non-aqueous epoxy compound (A).

The epoxy group-containing reactive diluent is not particularly limited as long as the epoxy compound has a viscosity of 500 mPa·s or less at 25°C as measured with an E-type viscometer (FMD type; manufactured by TOKIMEC INC., rotation speed: 60 rpm), and may be of a monofunctional type or a polyfunctional type.

Examples of the monofunctional epoxy group-containing reactive diluent include an alkyl glycidyl ether (preferable example of the alkyl group: 1 to 13 carbon atoms), phenyl glycidyl ether, o-cresyl glycidyl ether, an alkyl phenyl glycidyl ether (preferable example of the alkyl group: 1 to 20 carbon atoms, preferably 1 to 5 carbon atoms, example: methyl phenyl glycidyl ether, ethyl phenyl glycidyl ether, propyl phenyl glycidyl ether, p-tert-butyl phenyl glycidyl ether), phenol glycidyl ether, alkylphenol glycidyl ether, phenol (EO)ₙ glycidyl ether (the number of repetitions: n = 3 to 20, EO: -C₂H₄O-), an alkyl glycidyl ester (preferable example of the alkyl group: 3 to 10 carbon atoms), and polyglycol glycidyl ether.

Examples of the polyfunctional epoxy group-containing reactive diluent include 1,4-butanediol diglycidyl ether, 1,6-hexanediol diglycidyl ether, neopentyl glycol diglycidyl ether, cyclohexane dimethanol diglycidyl ether, resorcinol diglycidyl ether, polyglycol diglycidyl ether, mono- or polyalkylene glycol diglycidyl ether (preferable example of the alkylene group: 1 to 5 carbon atoms, example: ethylene glycol diglycidyl ether, dipropylene glycol diglycidyl ether, polypropylene glycol diglycidyl ether), trimethylolpropane triglycidyl ether, alkyl diglycidyl ether, and alkyl diglycidyl ester.

Preferable examples of the alkyl group include an alkyl group having 3 to 10 carbon atoms, and specific examples thereof include alkyl groups such as a neopentyl group and a 2-ethylhexyl group.

In the case of producing the present composition containing a reactive diluent, it is preferable to use the reactive diluent so that the content of the solid content of the reactive diluent is preferably 0.1 to 10 mass%, more preferably 0.5 to 8 mass%, and still more preferably 0.5 to 6 mass% with respect to 100 mass% of the nonvolatile content of the present composition.

When the content of the reactive diluent is in the above range, an anticorrosive coating film excellent in, for example, oil resistance, solvent resistance, chemical resistance, and anticorrosion property can be easily formed, and this can contribute to a decrease in the viscosity and extension of the pot life of the present composition.

### <Plasticizer>

The present composition (present kit) may contain a plasticizer. From the viewpoint that, for example, the flexibility of an anticorrosive coating film to be obtained can be improved, it is preferable to contain a plasticizer.

As the plasticizer, conventionally known plasticizers can be widely used, and examples thereof include a liquid hydrocarbon resin such as a low-boiling point fraction obtained by thermally decomposing naphtha, a petroleum resin that is solid at normal temperature, a xylene resin, and a coumarone-indene resin. Specific examples thereof include a liquid hydrocarbon resin and a flexibility imparting resin described in JP 2006-342360.

Among them, from the viewpoint that, for example, compatibility with the non-aqueous epoxy compound (A) is excellent, a liquid hydrocarbon resin is preferable, and a phenol-modified hydrocarbon resin is more preferable.

Examples of the phenol-modified hydrocarbon resin include resins obtained using diolefin, monoolefin, or α-methylstyrene contained in cracked oil fractions of petroleum or coal and phenols (phenol compounds), which are also described in, for example, JP H9-268209 and JP H7-196793.

More specific examples of the phenol-modified hydrocarbon resin include resins obtained by reaction of, for example, C5-based (aliphatic) petroleum resins obtained from C5 fractions as a raw material; C9-based (aromatic) petroleum resins obtained from C9 fractions as a raw material; C5·C9 copolymer petroleum resins; dicyclopentadiene resins obtained by using, as a raw material, dicyclopentadiene obtained by thermally dimerizing cyclopentadiene contained in C5 fractions; and α-methylstyrene with phenols. Among them, a resin obtained by addition polymerization of, for example, styrene, vinyltoluene, coumarone, indene, or α-methylstyrene contained in a cracked oil fractions of petroleum or coal with a phenol is preferable.

The average molecular weight of the phenol-modified hydrocarbon resin is usually 200 to 1,000, and the viscosity thereof is usually 30 to 10,000 mPa·s/25°C.

As the liquid hydrocarbon resin, commercially available products may be used, and examples of the commercially available products include "Necires EPX-L" and "Necires EPX-L2" (all manufactured by NEVCIN Polymers Co./phenol-modified hydrocarbon resin), and "Hirenol PL-1000S" (manufactured by Kolon Industries, Inc./phenol-modified hydrocarbon resin).

In the case of producing the present composition containing a plasticizer, it is preferable to use the plasticizer so that the content of the solid content of the plasticizer is preferably 0.5 to 15 mass% and more preferably 1 to 10 mass% with respect to 100 mass% of the nonvolatile content of the present composition.

When the content of the plasticizer is in the above range, an anticorrosive coating film more excellent in, for example, crack resistance can be easily formed.

### <Silane Coupling Agent>

Use of the silane coupling agent can further increase not only adhesion of the resulting anticorrosive coating film to a substrate, but also the water resistance, anticorrosion property (e.g., salt water resistance), and heat resistance of the resulting anticorrosive coating film.

The silane coupling agent is not particularly limited, and a conventionally known compound can be used, but is preferably a compound having at least two functional groups in the same molecule and capable of contributing to improvement in adhesion to a substrate and, for example, a decrease in the viscosity of the present composition.

For example, the silane coupling agent is preferably a compound represented by a formula: "X-SiMeₙY₃₋ₙ " [n is 0 or 1; X represents a functional group capable of reacting with an organic substance (e.g.: an amino group, a vinyl group, an epoxy group, a mercapto group, a halogeno group, a group in which part of a hydrocarbon group is substituted with these groups, or a group where part of a group, in which part of a hydrocarbon group is substituted with, for instance, an ether bond, is substituted with these groups), Me is a methyl group, and Y represents a hydrolyzable group (e.g.: an alkoxy group such as a methoxy group or an ethoxy group)].

In the case of using a silane coupling agent, which has reactivity with respect to the water-dilutable component (B) or the non-aqueous component (C), such as an epoxy group-containing silane coupling agent, the silane coupling agent is preferably blended in the first agent.

In the case of using a silane coupling agent, which has reactivity with respect to the non-aqueous epoxy compound (A), such as an amino group-containing silane coupling agent, the silane coupling agent is preferably blended in the second agent.

Among the silane coupling agents, an epoxy group-containing silane coupling agent in which X is an epoxy group, a group resulting from partial substitution of a hydrocarbon group with an epoxy group, or a group resulting from partial substitution of a group, in which a hydrocarbon group is partially substituted with, for example, an ether bond, with an epoxy group, is preferable.

As the silane coupling agent, commercially available products may be used, and examples of the commercially available products include "KBM-403" (manufactured by Shin-Etsu Chemical Co., Ltd.) and "Sila-Ace S-510" (manufactured by JNC Corporation) which are 3-glycidoxypropyltrimethoxysilane.

In the case of producing the present composition containing a silane coupling agent, it is preferable to use the silane coupling agent so that the content of the solid content of the silane coupling agent is preferably 0.1 to 15 mass%, more preferably 0.3 to 10 mass%, and still more preferably 0.5 to 8 mass% with respect to 100 mass% of the nonvolatile content of the present composition.

When the content of the silane coupling agent is in the above range, the viscosity of the present composition can be reduced, so that not only coating workability is improved, but also the adhesion to a substrate, the anticorrosion property, and the heat resistance of an anticorrosive coating film to be obtained are improved.

When the content of the solid content of the silane coupling agent is preferably 3 to 25 parts by mass and more preferably 4 to 20 parts by mass with respect to 100 parts by mass of the nonvolatile content of the present composition, the present composition excellent in low-temperature drying curability can be easily obtained.

### <Antifoaming Agent>

The present composition (present kit) preferably contains an antifoaming agent from the viewpoint that, for example, the generation of bubbles during producing or coating application of the composition can be suppressed, the bubbles generated in the present composition can be broken, and an anticorrosive coating film having desired physical properties can be easily formed.

As the antifoaming agent, commercially available products may be used, and examples of the commercially available products include "BYK-392", "BYK-066N", "BYK-1770", and "BYK-1790" (all manufactured by BYK Japan K.K.), "TEGO Airex 902W" (manufactured by Evonik), and "Spectrasyn 40" (manufactured by Exxonmobil Chemical Company).

In the case of producing the present composition containing an antifoaming agent, it is preferable to use the antifoaming agent so that the content of the solid content of the antifoaming agent is preferably 0.005 to 1 mass% and more preferably 0.01 to 0.5 mass% with respect to 100 mass% of the nonvolatile content of the present composition.

When the content of the antifoaming agent is in the above range, generation of bubbles can be sufficiently suppressed, and an anticorrosive coating film having desired physical properties can be easily formed.

### <Flash Rust Inhibitor>

In the case of applying the present composition to a metal surface, a flash rust inhibitor may be blended in the present composition (present kit) in order to prevent rust on the metal surface from bleeding to the coating film surface to generate spot rust (flash rust).

The flash rust inhibitor is not particularly limited as long as it is a component capable of suppressing the flash rust, and a conventionally known flash rust inhibitor can be used.

Examples of the flash rust inhibitor include nitrites such as sodium nitrite, potassium nitrite, calcium nitrite, strontium nitrite, barium nitrite, and ammonium nitrite; benzoates such as sodium benzoate, potassium benzoate, calcium benzoate, and ammonium benzoate; phytates such as sodium phytate and potassium phytate; salts of fatty acids such as sebacic acid and dodecanoic acid; phosphoric acid derivatives such as alkyl phosphoric acid and polyphosphoric acid; tannates; sulfonic acid metal salts; amine-based chelating agents such as N-(2-hydroxyethyl) ethylenediaminetriacetic acid (HEDTA), ethylenediaminetetraacetic acid (EDTA), diethylenetriaminepentaacetic acid (DTPA), propylenediaminetetraacetic acid (PDTA), iminodiacetic acid, nitrilotriacetic acid (NTA), diethylenetriamine pentamethylene phosphonic acid (DTPMP), and alkali metal salts thereof; addition reaction products of 4-methyl-γ-oxo-benzene butanoic acid and N-ethylmorpholine; interlayer compounds obtained by intercalating, for example, monoalkylamine, polyamine, or quaternary ammonium ion into layered phosphate such as aluminum dihydrogen tripolyphosphate; and hydrazine derivatives such as a hydrazide compound, a semicarbazide compound, and hydrazone compound.

As the flash rust inhibitor, commercially available products may be used, and examples of the commercially available products include "CHELESLITE W-410" and "CHELESLITE W-16B" (all manufactured by CHELEST CORPORATION/organic acid salt-based), and "HALOX FLASH-X 150" (manufactured by ICL Additives-Hammond/nitrite, benzoate-based).

In the case of producing the present composition containing a flash rust inhibitor, it is preferable to use the flash rust inhibitor so that the content of solid contents of the flash rust inhibitor is preferably 0.01 to 5 mass% and more preferably 0.05 to 3 mass% with respect to 100 mass% of the nonvolatile content of the present composition.

### <Film-Forming Aid>

The present composition (present kit) may contain a film-forming aid because the composition may be frozen, for example, in winter due to containing water, and from the viewpoint that, for example, the film formability at a low temperature and the finished appearance of the resulting anticorrosive coating film are improved.

As the film-forming aid, a film-forming aid that is usually used in an aqueous coating composition, such as an organic compound having a boiling point of 180°C or higher at normal temperature, can be used, and examples thereof include a linear or branched aliphatic alcohol having 5 to 15 carbon atoms; alcohols having an aromatic ring such as benzyl alcohol; monoethers such as (poly)ethylene glycol or (poly)propylene glycol; (poly)ethylene glycol ether esters; and (poly)propylene glycol ether esters.

In the case of producing the present composition containing a film-forming aid, from the viewpoint that, for example, an anticorrosive coating film excellent in film formability at a low temperature and appearance can be easily formed, it is preferable to use the film-forming aid so that the content of the film-forming aid is preferably 1 to 10 mass% and more preferably 2 to 8 mass% with respect to 100 mass% of the nonvolatile content of the present composition.

### <Curing Accelerator>

For the purpose of, for example, promoting dry curability when an anticorrosive coating film is formed from the present composition, a curing accelerator may be blended in the present composition (present kit) as necessary.

Examples of the curing accelerator include polymerizable (meth)acrylate monomer (provided that the monomer is a compound other than the polyvalent carboxylic acid), and a tertiary amine. Note that, in the case of using a polymerizable (meth)acrylate monomer, the polymerizable (meth)acrylate monomer is blended in the first agent, and in the case of using a tertiary amine, the tertiary amine is blended in the second agent described later.

Examples of commercially available products of the polymerizable (meth)acrylate monomer include "M-CURE 100" (monofunctional aromatic acrylate, functional group equivalent: 257 to 267), "M-CURE 200" (difunctional aromatic acrylate, functional group equivalent: 130 to 140), "M-CURE 201" (difunctional aliphatic acrylate, functional group equivalent: 95 to 105), "M-CURE300" (trifunctional aliphatic acrylate, functional group equivalent: 112 to 122), and "M-CURE 400" (tetrafunctional aliphatic acrylate, functional group equivalent: 80 to 90) (all manufactured by SARTOMER COMPANY, INC.).

Specific examples of the tertiary amine include triethanolamine, dialkylaminoethanol, triethylenediamine (1,4-diazabicyclo[2.2.2]octane), and 2,4,6-tris(dimethylaminomethyl)phenol, and examples of commercially available products include "Ancamine K-54" (manufactured by Evonik, 2,4,6-tri(dimethylaminomethyl)phenol).

In the case of producing the present composition containing a curing accelerator, it is preferable to use the curing accelerator so that the content of the solid content of the curing accelerator is preferably 0.1 to 5 mass% with respect to 100 mass% of the nonvolatile content of the present composition.

### <Organic solvent>

As the organic solvent, an organic solvent having a boiling point of lower than 180°C under normal pressure is preferable, and examples thereof include aromatic hydrocarbon-based solvents such as toluene and xylene, ketone-based solvents such as methyl ethyl ketone (MEK) and methyl isobutyl ketone (MIBK), ether-based solvents such as butyl cellosolve, ester-based solvents such as butyl acetate, alcohol-based solvents such as isopropanol, isobutyl alcohol, n-butanol, and methoxypropanol, and aliphatic hydrocarbon-based solvents such as n-hexane, n-octane, 2,2,2-trimethylpentane, isooctane, n-nonane, cyclohexane, and methylcyclohexane.

In the case of producing the present composition containing an organic solvent, it is preferable to use the organic solvent so that the content of VOC in the present composition falls within the following range.

The first agent is preferably a solvent-based agent containing an organic solvent. In the case of preparing the first agent containing an organic solvent, it is preferable to use the organic solvent so that the content of the organic solvent is preferably 12 mass% or less and more preferably 10 mass% or less, and preferably 1 mass% or more and more preferably 4 mass% or more with respect to 100 mass% of the first agent.

### <Step 2>

The step 2 is a step of preparing a second agent containing water using an amine compound-containing water-dilutable component (B), an amine compound-containing non-aqueous component (C), and a pigment (D).

In the step 2, the following other components may be further used.

The step 2 is specifically a step of mixing (or kneading) the respective components to be blended in the second agent, and at the time of mixing (or kneading), the respective components may be added and mixed at a time, or may be added and mixed in plural times. Preferred examples of the latter case include a method including a step of preparing a pigment dispersion containing water and the pigment (D), a step of preparing an amine dispersion containing the water-dilutable component (B), the non-aqueous component (C), and water, and a step of mixing the pigment dispersion and the amine dispersion.

The step of preparing a pigment dispersion is desirably a step of obtaining a pigment dispersion having a particle size (in accordance with JIS K 5600-2-5:1999) measured by a grind gauge of 70 µm or less, preferably 60 µm or less.

For the mixing (or kneading), for example, a conventionally known device such as a mixer, a disperser, or a stirrer can be used, and examples of the device include a disperser, a mixing/dispersing mill, a mortar mixer, a roll, a paint shaker, and a homogenizer. Note that the mixing (or kneading) may be performed while performing, for example, heating or cooling according to, for example, the season and the environment.

The amine compound-containing water-dilutable component (B) in the present invention refers to a component containing an epoxy-curable amine compound that is emulsified and dispersed in a relatively large amount in a dispersion medium containing water (hereinafter, also referred to as "aqueous medium"). Specifically, at 23°C, in a mixed liquid obtained by mixing a component containing an amine compound and water or volatilizing a solvent/dispersion medium so that the solid content is 50 mass%, sufficiently stirring the mixture, and allowing the mixture to stand still at 23°C for 1 hour, when 80 mass% or more of the solid content of the component mixed with water is stably present in water and the mixed liquid is maintained in an emulsion state, the component is defined as the water-dilutable component (B). Note that the component containing an amine compound having a solid content of less than 50 mass% is adjusted to have a solid content of 50 mass% using, for example, an evaporator.

The amine compound-containing non-aqueous component (C) refers to a component containing an epoxy-curable amine compound that is not freely miscible with water, and refers to a component containing an epoxy-curable amine compound that is substantially insoluble in water. Specifically, when a mixed liquid obtained by mixing a component containing an amine compound and water at 23°C so that the solid content is 3 mass%, sufficiently stirring the mixture, and allowing the mixture to stand still at 23°C for 1 hour is not in a uniform state, and 50 mass% or more of the solid content of the component mixed with water is separated, precipitated, or suspended, the component is defined as the non-aqueous component (C).

Note that, when 90 mass% or more of the solid content of the component mixed with water is stably present in water in the mixed liquid and the solid content of the component mixed with water is present in a state of having an average particle size of less than 10 nm measured by a laser diffraction particle size distribution measuring apparatus (e.g.: Mastersizer 3000 (manufactured by Spectris Co., Ltd.)), the component is defined as a water-soluble component in the present specification.

The component containing an amine compound other than the water-dilutable component (B), the non-aqueous component (C), and the water-soluble component are defined as other amine components in the present specification.

From the viewpoint that, for example, an anticorrosive coating film having excellent anticorrosion property, coating film strength, and dryness can be easily formed, it is desirable to use the water-dilutable component (B) and the non-aqueous component (C) in an amount such that the reaction ratio calculated by the following formula (1) is preferably 0.3 to 1.5 and more preferably 0.4 to 1.2. 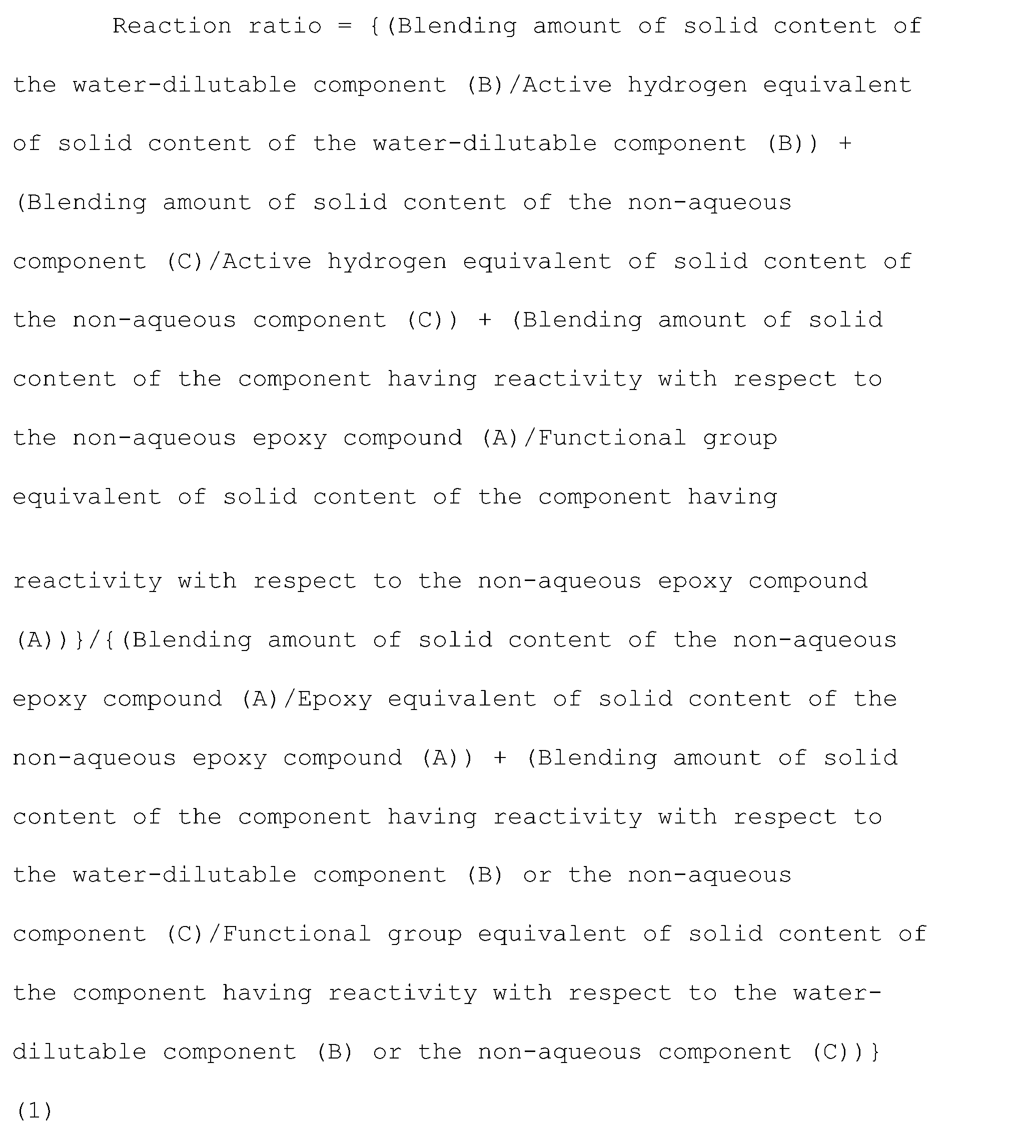 Reaction ratio = {(Blending amount of solid content of the water-dilutable component (B)/Active hydrogen equivalent of solid content of the water-dilutable component (B)) + (Blending amount of solid content of the non-aqueous component (C)/Active hydrogen equivalent of solid content of the non-aqueous component (C)) + (Blending amount of solid content of the component having reactivity with respect to the non-aqueous epoxy compound (A)/Functional group equivalent of solid content of the component having reactivity with respect to the non-aqueous epoxy compound (A))}/{(Blending amount of solid content of the non-aqueous epoxy compound (A)/Epoxy equivalent of solid content of the non-aqueous epoxy compound (A)) + (Blending amount of solid content of the component having reactivity with respect to the water-dilutable component (B) or the non-aqueous component (C)/Functional group equivalent of solid content of the component having reactivity with respect to the water-dilutable component (B) or the non-aqueous component (C))} (1)

Here, examples of the "component having reactivity with respect to the water-dilutable component (B) or the non-aqueous component (C)" and the "component having reactivity with respect to the non-aqueous epoxy compound (A)" in the above formula (1) include the silane coupling agent.

As the silane coupling agent, since a silane coupling agent having an amino group or an epoxy group as a reactive group can be used, it is necessary to determine whether the silane coupling agent has reactivity with respect to the water-dilutable component (B) or the non-aqueous component (C) or has reactivity with respect to the non-aqueous epoxy compound (A) depending on the type of the reactive group, and to calculate the reaction ratio.

The "functional group equivalent" of each component means a mass (g) per mol of functional group obtained by dividing the mass of 1 mol of each component by the number of moles of functional group contained therein.

### [Water-Dilutable Component (B)]

The water-dilutable component (B) is not particularly limited as long as it is a component that satisfies the definition of the water-dilutable component and is a component containing an amine compound.

By using the water-dilutable component (B) together with the component (C) and the pigment (D) in the second agent, the present composition that is uniform when mixed with the first agent can be obtained, a second agent excellent in storage stability can be obtained, and the present composition excellent in spray coating workability, particularly atomization property during spray coating application can be obtained.

The water-dilutable component (B) used in the second agent may be of one type or two or more types.

The active hydrogen equivalent of the solid content of the water-dilutable component (B) is preferably 50 to 200 and more preferably 60 to 190 from the viewpoint that, for example, an anticorrosive coating film excellent in curability and anticorrosion property can be easily formed.

The use amount of the solid content of the water-dilutable component (B) in the step 2 is preferably an amount that satisfies the above formula (1), and more preferably such an amount that falls within the following range.

The content of the solid content of the water-dilutable component (B) is preferably 1 to 15 mass% and more preferably 2 to 10 mass% with respect to 100 mass% of the nonvolatile content of the present composition.

The content of the solid content of the water-dilutable component (B) is preferably 3 to 20 mass% and more preferably 4 to 15 mass% with respect to 100 mass% of the solid content of the second agent.

When the content of the water-dilutable component (B) is in the above range, an anticorrosive coating film excellent in anticorrosion property and dryness can be easily formed.

Specific examples of the water-dilutable component (B) include a component containing an amine compound having hydrophilicity obtained by, for example, reacting a conventionally known amine compound used as a curing agent of an epoxy compound with, for example, a glycidyl ether of a polyalkylene glycol, or a polyoxyalkylene amine, a component containing an amine compound having an amide structure obtained using a fatty acid and an aliphatic amine compound, and a component obtained by forcibly dispersing a conventionally known amine compound used as a curing agent of an epoxy compound, which is imparted with emulsifying ability by neutralizing with an acid or mixing with an emulsifier, in water.

The amine compound used as a curing agent of an epoxy compound is not particularly limited as long as it is an amine compound other than the tertiary amine (amine compound having only a tertiary amino group) and the flash rust inhibitor, and examples thereof include an amine compound containing two or more amino groups in one molecule, and amine compounds such as aliphatic, alicyclic, aromatic, and heterocyclic amine compounds are preferable.

Examples of the aliphatic amine compound include an alkylene polyamine, a polyalkylene polyamine, and an alkylaminoalkylamine.

Examples of the alkylene polyamine include a compound represented by a formula: "H₂N-R¹-NH₂" (R¹ is a divalent hydrocarbon group having 1 to 12 carbon atoms), and specific examples thereof include methylenediamine, ethylenediamine, 1,2-diaminopropane, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, and trimethylhexamethylenediamine.

Examples of the polyalkylene polyamine include a compound represented by a formula: "H₂N-(CₘH₂ₘNH)ₙH" (m is an integer of 1 to 10, and n is an integer of 2 to 10, preferably an integer of 2 to 6), and specific examples thereof include diethylenetriamine, dipropylenetriamine, triethylenetetramine, tripropylenetetramine, tetraethylenepentamine, tetrapropylenepentamine, pentaethylenehexamine, nonaethylenedecamine, bis(hexamethylene)triamine, and triethylene-bis(trimethylene)hexamine.

Examples of the alkylaminoalkylamine include a compound represented by a formula: "R²₂N-(CH₂)ₚ-NH₂" (R²'s are independently a hydrogen atom or an alkyl group having 1 to 8 carbon atoms (however, at least one R² is an alkyl group having 1 to 8 carbon atoms), and p is an integer of 1 to 6), and specific examples thereof include dimethylaminoethylamine, diethylaminoethylamine, dibutylaminoethylamine, dimethylaminopropylamine, diethylaminopropylamine, dipropylaminopropylamine, dibutylaminopropylamine, and dimethylaminobutylamine.

Examples of the aliphatic amine curing agent other than these include tetra(aminomethyl)methane, tetrakis(2-aminoethylaminomethyl)methane, 1,3-bis(2'-aminoethylamino)propane, tris(2-aminoethyl)amine, bis(cyanoethyl)diethylenetriamine, polyoxyalkylene polyamine (in particular diethylene glycol bis(3-aminopropyl)ether), bis(aminomethyl)cyclohexane, isophoronediamine (IPDA), menthanediamine (MDA), o-xylylenediamine, m-xylylenediamine (MXDA), p-xylylenediamine, bis(aminomethyl)naphthalene, bis(aminoethyl)naphthalene, 1,4-bis(3-aminopropyl)piperazine, 1-(2'-aminoethylpiperazine), and 1-[2'-(2"-aminoethylamino)ethyl]piperazine.

Specific examples of the alicyclic amine curing agent include cyclohexanediamine, diaminodicyclohexylmethane (in particular, 4,4'-methylenebiscyclohexylamine), 4,4'-isopropylidenebiscyclohexylamine, norbornanediamine, and 2,4-di(4-aminocyclohexylmethyl)aniline.

Examples of the aromatic amine curing agent include an aromatic polyamine compound having two or more primary amino groups bonded to an aromatic ring such as a benzene ring or a naphthalene ring.

Specific examples of this aromatic amine curing agent include phenylenediamine, naphthalenediamine, diaminodiphenylmethane, 2,2-bis(4-aminophenyl)propane, 4,4'-diaminodiphenyl ether, 4,4'-diaminobenzophenone, 4,4'-diaminodiphenylsulfone, 3,3'-dimethyl-4,4'-diaminodiphenylmethane, diaminodiethylphenylmethane, 2,4'-diaminobiphenyl, 2,3'-dimethyl-4,4'-diaminobiphenyl, 3,3'-dimethoxy-4,4'-diaminobiphenyl, and diethylmethylbenzenediamine.

Specific examples of the heterocyclic amine curing agent include 1,4-diazacycloheptane, 1,4-bis(3-aminopropyl)piperazine, 1-[2'-(2"-aminoethylamino)ethyl]piperazine, 1,11-diazacycloeicosane, and 1,15-diazacyclooctacosane.

Examples of the amine compound used as a curing agent of an epoxy compound further include a modified product of the amine compound, such as a fatty acid modified product (e.g.: polyamidoamine), an amine adduct with an epoxy compound, a Mannich modified amine (e.g.: a Mannich modified amine having a phenol-derived backbone (such as phenalkamine or phenalkamide)), a Michael adduct, ketimine, and aldimine. Among them, polyamidoamine, an amine adduct with an epoxy compound, and a Mannich modified amine having a phenol-derived backbone are preferable.

As the water-dilutable component (B), a component produced by a conventionally known method may be used, or a commercially available product may be used.

Examples of the polyamidoamine include a compound formed by a condensation reaction using the amine compound used as a curing agent of an epoxy compound and a fatty acid such as a dimer acid.

Examples of the amine adduct with an epoxy compound include adduct reaction products obtained using the amine compound used as a curing agent of an epoxy compound and the epoxy compounds listed in the section of the non-aqueous epoxy compound (A).

Examples of the Mannich modified amine having a phenol-derived backbone include Mannich modified amine compounds formed by a Mannich condensation reaction using phenols such as cardanol, aldehydes such as formaldehyde, and the amine compound used as a curing agent of an epoxy compound.

The water-dilutable component (B) may be a dispersion (amine emulsion) in which an amine compound is dispersed in an aqueous medium, or may be the amine compound itself (amine compound 100%).

The content of the solid content of the water-dilutable component (B) is preferably 30 to 100 mass% and more preferably 40 to 100 mass% with respect to 100 mass% of the water-dilutable component (B). The content of the amine compound in the solid content of the water-dilutable component (B) is preferably 70 to 100 mass% and more preferably 80 to 100 mass% with respect to 100 mass% of the solid content of the water-dilutable component (B).

Note that examples of the solid content other than the amine compound in the water-dilutable component (B) include a solid content contained in a component commercially available as a water-dilutable amine curing agent, and specific examples thereof include organic compounds having a boiling point of 180°C or higher at normal temperature, such as a surfactant and benzyl alcohol.

It is sufficient that water is contained in the aqueous medium, and a medium having a boiling point of lower than 180°C under normal pressure other than water may be contained in the aqueous medium.

Examples of the medium having a boiling point of lower than 180°C under normal pressure other than water include acetone, methyl alcohol, ethyl alcohol, n-propyl alcohol, isopropyl alcohol, n-butyl alcohol, isobutyl alcohol, 2-methoxyethanol, 2-ethoxyethanol, 2-butoxyethanol, 1-methoxy-2-propanol, 1-ethoxy-2-propanol, diacetone alcohol, dioxane, ethylene glycol dimethyl ether, ethylene glycol diethyl ether, and ethylene glycol monopropyl ether. One or two or more of these can be used.

The amine emulsion can be prepared, for example, by emulsifying an amine compound using one or two or more surfactants to form an emulsion.

### [Non-Aqueous Component (C)]

The non-aqueous component (C) is not particularly limited as long as it is a component that satisfies the definition of the non-aqueous component and is a component containing an amine compound, and specific examples thereof include an amine compound that satisfies the definition among the amine compound used as a curing agent of an epoxy compound.

By using the non-aqueous component (C) together with the component (B) and the pigment (D) in the second agent, it is possible to form an anticorrosive coating film excellent in anticorrosion property, particularly anticorrosion property under salt spray and under high temperature and high humidity.

The non-aqueous component (C) used in the second agent may be of one type or two or more types.

From the viewpoint that, for example, an anticorrosive coating film excellent in anticorrosion property can be easily formed and an anticorrosive coating composition having a low viscosity can be easily obtained, the non-aqueous component (C) has a molecular weight of 3,000 or less and more preferably 2,500 or less, desirably contains an amine compound having a cyclic structure, and is more preferably the amine compound.

The content of solid content of the non-aqueous component (C) is preferably 30 to 100 mass%, more preferably 40 to 100 mass%, and still more preferably 100 mass% with respect to 100 mass% of the non-aqueous component (C), and the non-aqueous component (C) is particularly preferably (only) composed of the amine compound.

Note that examples of the solid content other than the amine compound in the non-aqueous component (C) include a solid content (e.g.: benzyl alcohol) contained in a component commercially available as a non-aqueous amine curing agent.

The active hydrogen equivalent of the solid content of the non-aqueous component (C) is preferably 30 to 200 and more preferably 40 to 150 from the viewpoint that, for example, an anticorrosive coating film excellent in curability and anticorrosion property can be easily formed.

The use amount of the solid content of the non-aqueous component (C) in the step 2 is preferably an amount that satisfies the above formula (1), and more preferably such an amount that falls within the following range.

The content of the solid content of the non-aqueous component (C) is preferably 2 to 25 mass% and more preferably 3 to 20 mass% with respect to 100 mass% of the nonvolatile content of the present composition.

The content of the solid content of the non-aqueous component (C) is preferably 5 to 30 mass% and more preferably 6 to 25 mass% with respect to 100 mass% of the solid content of the second agent.

When the content of the non-aqueous component (C) is in the above range, the present composition excellent in dryness can be easily obtained, and an anticorrosive coating film excellent in anticorrosion property can be easily formed.

As the non-aqueous component (C), a component produced by a conventionally known method may be used, or a commercially available product may be used.

### [Pigment (D)]

Examples of the pigment (D) include an extender pigment, a coloring pigment, and an antirust pigment, and the pigment may be either organic or inorganic.

By using the pigment (D) together with the component (B) and the component (C) in the second agent, a second agent excellent in storage stability can be obtained, and the present composition excellent in spray coating workability, particularly atomization property during spray coating application can be obtained.

The pigment (D) used in the second agent may be of one type or two or more types.

Examples of the extender pigment include talc, mica, (precipitated) barium sulfate, (potash) feldspar, kaolin, alumina white, bentonite, wollastonite, clay, glass flakes, aluminum flakes, magnesium carbonate, barium carbonate, calcium carbonate, dolomite, and silica. In particular, talc, mica, silica, (precipitated) barium sulfate, and (potash) feldspar are preferable.

In the case of producing the present composition containing an extender pigment, it is preferable to use the extender pigment so that the content of the extender pigment is preferably 5 to 80 mass% and more preferably 10 to 70 mass% with respect to 100 mass% of the nonvolatile content of the present composition.

Examples of the coloring pigment include inorganic pigments such as carbon black, titanium dioxide (titanium white), iron oxide (red iron oxide), yellow iron oxide, flaky iron oxide, and ultramarine blue, and organic pigments such as cyanine blue and cyanine green. In particular, titanium white, carbon black, and red iron oxide are preferable.

In the case of producing the present composition containing a coloring pigment, it is preferable to use the coloring pigment so that the content of the coloring pigment is preferably 0.1 to 30 mass% and more preferably 1 to 20 mass% with respect to 100 mass% of the nonvolatile content of the present composition.

Examples of the antirust pigment include zinc powder, zinc alloy powder, a zinc phosphate-based compound, a calcium phosphate-based compound, an aluminum phosphate-based compound, a magnesium phosphate-based compound, a zinc phosphite-based compound, a calcium phosphite-based compound, an aluminum phosphite-based compound, a strontium phosphite-based compound, an aluminum tripolyphosphate-based compound, a molybdate-based compound, a zinc cyanamide-based compound, a borate compound, a nitro compound, and a complex oxide.

In the case of producing the present composition containing an antirust pigment, it is preferable to use the antirust pigment so that the content of the antirust pigment is preferably 0.5 to 20 mass% and more preferably 1 to 10 mass% with respect to 100 mass% of the nonvolatile content of the present composition.

The use amount of the solid content of the pigment (D) in the step 2 is more preferably such an amount that falls within the following range.

It is preferable to use the pigment (D) so that the pigment volume concentration (PVC) in the present composition is preferably 10 to 70% and more preferably 20 to 60%.

It is preferable to use the pigment (D) so that the pigment volume concentration (PVC) in the second agent is preferably 35 to 75% and more preferably 40 to 70%.

When the PVC is in the above range, the present composition excellent in coating workability can be easily obtained, and an anticorrosive coating film excellent in adhesion to a substrate due to stress relief and anticorrosion property can be easily formed.

The PVC in the present composition refers to the total volume concentration of the pigment (D) with respect to the volume of the nonvolatile content of the present composition, and the PVC in the second agent refers to the total volume concentration of the pigment (D) with respect to the volume of the solid content of the second agent. Specifically, these PVCs can be calculated by the following formula: 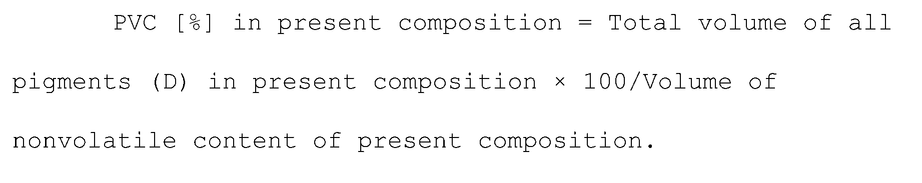 PVC [%] in present composition = Total volume of all pigments (D) in present composition × 100/Volume of nonvolatile content of present composition. 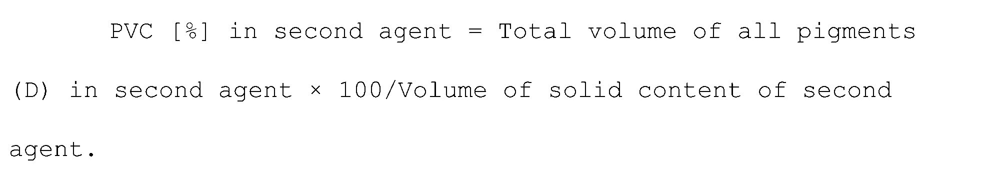 PVC [%] in second agent = Total volume of all pigments (D) in second agent × 100/Volume of solid content of second agent.

The volume of the nonvolatile content of the present composition can be calculated from the mass and true density of the nonvolatile content of the present composition, and the volume of the solid content of the second agent can be calculated from the mass and true density of the solid content of the second agent. The mass and true density of the nonvolatile content may be measured values or values calculated from raw materials used.

The volume of the pigment (D) can be calculated from the mass and true density of the pigment (D) used. The mass and true density of the pigment (D) may be measured values or values calculated from raw materials used. For example, they can be calculated by separating the pigment (D) and other components from the nonvolatile content of the present composition or the solid content of the second agent, and measuring the mass and true density of the pigment (D) separated.

### <Water>

The second agent contains water, and the step 2 is a step of preparing a second agent containing water.

The raw material such as the water-dilutable component (B) used in preparing the second agent may contain water. In the case of using such a raw material containing water, water other than the water contained in the raw material may not be used, but from the viewpoint that, for example, the preparation of the present composition becomes easier, a second agent more excellent in storage stability can be easily obtained, and the present composition more excellent in coating workability can be easily obtained, it is preferable to further use water in the step 2 in addition to the water that can be contained in the raw material such as the water-dilutable component (B).

The water to be further used is not particularly limited, and for example, tap water may be used, but water such as ion-exchanged water or distilled water is preferably used.

The content of water in the second agent (including water that can be contained in the raw material such as the water-dilutable component (B)) is not particularly limited, but is preferably 10 to 50 mass% and more preferably 15 to 40 mass% from the viewpoint that, for example, second agent excellent in storage stability can be easily obtained.

From the viewpoint that, for example, a desired anticorrosive coating composition can be easily obtained, the content of water in the second agent is preferably 50 mass% or more, more preferably 70 to 100 mass%, and particularly preferably 80 to 100 mass% with respect to 100 mass% of the total amount of a dispersion medium and a solvent in the second agent.

### [Other Components]

The second agent is not particularly limited as long as it contains the water-dilutable component (B), the non-aqueous component (C), the pigment (D), and water, and as desired, as long as the effects of the present invention are not impaired, the second agent may contain components other than the water-dilutable component (B), the non-aqueous component (C), the pigment (D), and water, for example, other components such as a divalent or higher polyvalent carboxylic acid, a viscosity adjusting agent (anti-sagging agent, antisettling agent, thixotropic agent), a water-soluble component containing an amine compound, other amine components, a (pigment) dispersant, a plasticizer, a silane coupling agent, an antifoaming agent, a flash rust inhibitor, a curing accelerator, a curing catalyst, a film-forming aid, and an organic solvent (the second agent may contain the other components).

One kind of the other component may be used, or two or more kinds thereof may be used.

As the other components, conventionally known components can be used, and examples of the plasticizer, the silane coupling agent, the antifoaming agent, the flash rust inhibitor, the film-forming aid, the curing accelerator, and the organic solvent include the components similar to the components described in the section of the first agent.

### <Divalent or Higher Polyvalent Carboxylic Acid>

The divalent or higher polyvalent carboxylic acid is an organic acid having two or more carboxy groups in one molecule.

From the viewpoint that, for example, the present composition having a long pot life can be easily obtained and an anticorrosive coating film excellent in anticorrosion property can be easily formed, it is preferable that the second agent contains not an inorganic acid such as hydrochloric acid and not a monovalent carboxylic acid such as acetic acid but a divalent or higher polyvalent carboxylic acid.

The polyvalent carboxylic acid is not particularly limited, and examples thereof include oxalic acid, malonic acid, succinic acid, malic acid, tartaric acid, glutaric acid, adipic acid, maleic acid, and citric acid. Among them, from the viewpoint that, for example, an anticorrosive coating film more excellent in anticorrosion property can be easily formed, malic acid, succinic acid, and tartaric acid are preferable.

The molecular weight of the polyvalent carboxylic acid is preferably 500 or less, more preferably 300 or less, and still more preferably 200 or less from the viewpoint that, for example, the present composition having excellent balance between pot life and dryness can be easily obtained.

In the case of producing the present composition containing a polyvalent carboxylic acid, from the viewpoint that, for example, the present composition having a long pot life can be easily obtained and an anticorrosive coating film excellent in anticorrosion property can be easily formed, the use amount of the polyvalent carboxylic acid is preferably 5 parts by mass or more and more preferably 10 parts by mass or more and preferably 30 parts by mass or less and more preferably 25 parts by mass or less with respect to 100 parts by mass of the total solid content of the component (B) and the component (C) used in the step 2.

### <Viscosity Adjusting Agent>

The viscosity adjusting agent is not particularly limited, but is preferably a material capable of suppressing the settling of, for example, a pigment in the present composition and improving the storage stability thereof, or a material capable of improving the anti-sagging property of the present composition during or after coating application.

By using the viscosity adjusting agent together with the component (B), the component (C), and the pigment (D) in the second agent, there is a tendency that a second agent excellent in storage stability can be easily obtained, and there is a tendency that the present composition excellent in spray coating workability, particularly atomization property during spray coating application can be easily obtained.

As the viscosity adjusting agent, conventionally known viscosity adjusting agents, such as an organic clay wax such as a stearate salt, a lecithin salt, or an alkyl sulfonate salt of Al, Ca, or Zn, a polyethylene wax, an amide-based viscosity adjusting agent, an amide neutralizing salt-based viscosity adjusting agent, a mixture of an amide-based viscosity adjusting agent, a hydrogenated castor oil wax, a mixture of a hydrogenated castor oil wax and an amide wax, synthetic fine powder silica, an oxidized polyethylene-based wax, and a urea-based viscosity adjusting agent, can be used, and among them, from the viewpoint that, for example, the anti-sagging property of the present composition during coating application and after coating application can be further improved, an amide-based viscosity adjusting agent, an amide neutralizing salt-based viscosity adjusting agent, and a mixture of an amide-based viscosity adjusting agent are preferable.

As such a viscosity adjusting agent, commercially available products may be used, and examples of the commercially available products include "Disparlon 305", "Disparlon 4200-20", "Disparlon 6650", and "Disparlon AQ600" manufactured by Kusumoto Chemicals, Ltd., "A-S-A T-250F", "A-S-A T-75F", "A-S-A TW-121", "A-S-A TW-123", and "AS-A TW-124" manufactured by ITOH OIL CHEMICALS CO., LTD., "FLOWNON RCM-300" manufactured by KYOEISHA CHEMICAL Co., LTD., "RHEOBYK-420" manufactured by BYK Japan K.K., "BENTONE SD-2" manufactured by Elementis Specialties, Inc., "Aerosil R972" manufactured by NIPPON AEROSIL CO., LTD., and "Crayvallac Optima" and "Crayvallac REV" manufactured by Arkema Coating Resins Co., Ltd.

In the case of producing the present composition containing a viscosity adjusting agent, it is preferable to use the viscosity adjusting agent so that the content of the solid content of the viscosity adjusting agent is preferably 0.1 to 10 mass% and more preferably 0.3 to 8 mass% with respect to 100 mass% of the nonvolatile content of the present composition.

In the case of preparing the second agent containing a viscosity adjusting agent, it is preferable to use the viscosity adjusting agent so that the content of the solid content of the viscosity adjusting agent is preferably 0.3 to 12 mass% and more preferably 0.5 to 10 mass% with respect to 100 mass% of the nonvolatile content of the second agent.

When the content of the viscosity adjusting agent is in the above range, a second agent excellent in storage stability can be easily obtained, and the present composition excellent in spray coating workability, particularly atomization property during spray coating application and anti-sagging property can be easily obtained.

### <(Pigment) Dispersant>

The (pigment) dispersant is preferably a dispersant capable of uniformly wet-dispersing, for example, the pigment in the present composition to prepare a stable dispersion.

Examples of the (pigment) dispersant include a polymer dispersant.

In the case of producing the present composition containing a (pigment) dispersant, it is preferable to use the (pigment) dispersant so that the content of the solid content of the (pigment) dispersant is preferably 0.01 mass% or more, more preferably 0.1 mass% or more, and still more preferably 0.2 mass% or more, and preferably 5 mass% or less with respect to 100 mass% of the nonvolatile content of the present composition.

### <Step 3>

The step 3 is a step of mixing the first agent and the second agent respectively prepared in the steps 1 and 2, and the n-th agent is used as necessary.

The present composition can be produced by mixing (or kneading) the first agent, the second agent, and the n-th agent used as necessary.

For the mixing (or kneading), for example, a conventionally known device such as a mixer, a disperser, or a stirrer can be used, and examples of the device include a disperser, a mixing/dispersing mill, a mortar mixer, a roll, a paint shaker, and a homogenizer. Note that the mixing (or kneading) may be performed while performing, for example, heating or cooling according to, for example, the season and the environment.

### <Present Composition>

The present composition is obtained from the present kit.

Since the present composition is excellent in coating workability, the present composition can be applied by various conventionally known coating methods, but since the present composition is excellent in spray coating workability, particularly atomization property during spray coating application, the present composition is particularly suitably used for spray coating application.

The content of the nonvolatile content in the present composition is preferably 60 mass% or more and more preferably 70 mass% or more, and the upper limit thereof is not particularly limited, but is, for example, 90 mass%.

Note that the content of the nonvolatile content in the present composition corresponds to the following heating residual percentage.

It can be said that the present composition in which the content of the nonvolatile content is in the above range is a high-solid composition. When the content of the nonvolatile content is in the above range, it is possible to easily obtain the present composition that is excellent in dryness, is less likely to cause sagging during coating application, can form a thick film by one coating application, and is excellent in coating workability.

The viscosity of the present composition measured at 23°C is preferably 7000 mPa·s or less, more preferably 5500 mPa·s or less, and still more preferably 5000 mPa·s or less, and the lower limit thereof is not particularly limited, but is preferably 1500 mPa·s or more, more preferably 2000 mPa·s or more, and still more preferably 2500 mPa·s or more.

According to the present kit and the present method, it is possible to easily obtain an anticorrosive coating composition having a viscosity in these ranges and a content of the nonvolatile content in the above ranges. When the viscosity is in the above range, it is possible to easily obtain the present composition that is excellent in handleability and anti-sagging property, can be applied by various desired coating methods without limitation of a coating method, and is more excellent in coating workability.

Note that the present composition may be diluted with a solvent or a dispersion medium (e.g.: water) and used depending on, for example, a coating method, but according to an embodiment of the present invention, since the viscosity is in the above range without the present composition being diluted with a solvent or a dispersion medium, coating application can be performed without the present composition being diluted with a solvent or a dispersion medium. Each description of the present specification is a description relating to a case before the present composition being diluted with a solvent or a dispersion medium.

The content of VOC of the present composition is preferably 100 g/L or less, more preferably 80 g/L or less, and still more preferably 60 g/L or less from the viewpoint of, for example, obtaining the present composition having less influence on the natural environment and the coating working environment.

The VOC content in the present composition can be calculated from the following formula (2) using the specific gravity of the composition, the heating residual percentage (mass ratio of the nonvolatile content), and the moisture percentage. Note that the specific gravity of the composition, the heating residual percentage, and the moisture percentage may be the following measured values or values calculated from the raw materials to be used. 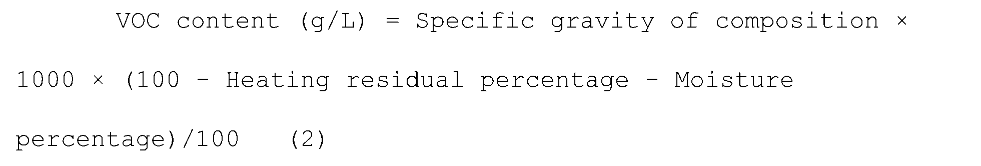 VOC content (g/L) = Specific gravity of composition × 1000 × (100 - Heating residual percentage - Moisture percentage)/100 (2)

Specific gravity of composition (g/cm³): a value calculated by filling a specific gravity cup having an internal volume of 100 ml with the present composition (a composition obtained immediately after the first agent and the second agent (and the n-th agent in the case of containing the n-th agent) are mixed) under a temperature condition of 23°C, and then measuring the mass of the composition.

Heating residual percentage (mass%): a value of mass percentage calculated by weighing 1 ± 0.1 g of the present composition (a composition obtained immediately after the first agent and the second agent (and the n-th agent in the case of containing the n-th agent) are mixed) in a flat bottom dish, spreading the composition uniformly using a wire having a known mass, drying the composition at 23°C for 24 hours, and then measuring the mass of the heating residue (nonvolatile content) and the wire when heating is performed at a heating temperature of 125°C for 1 hour (under normal pressure).

The heating residue is referred to as "nonvolatile content of the present composition" in the present specification.

Note that, in the present specification, in each component (e.g.: the non-aqueous epoxy compound (A)) to be a raw material constituting, for example, the first agent and the second agent, in the first agent and the second agent, a component other than the solvent and the dispersion medium (e.g.: water) having a boiling point of lower than 180°C under normal pressure is referred to as "solid content".

Moisture percentage (mass%): a value of mass percentage of water contained in 100 mass% of the present composition as measured by Karl Fischer method.

### <<Anticorrosive Coating Film and Substrate with Anticorrosive Coating Film>>

The anticorrosive coating film according to an embodiment of the present invention (hereinafter, also referred to as "present coating film") is formed using the present kit, and specifically, formed from the present composition obtained from the present kit or the present composition produced by the present method.

The present coating film is preferably used as a substrate with an anticorrosive coating film including a substrate and the present coating film (hereinafter, also referred to as "substrate with the present coating film"). The substrate with the present coating film is a laminate including the present coating film and a substrate.

The material of the substrate is not particularly limited, and examples thereof include iron and steel (such as iron, steel, alloy iron, carbon steel, mild steel, or alloy steel), non-iron metal (such as zinc, aluminum, copper, brass, zinc plating, or zinc spraying), and stainless steel (such as SUS304 or SUS410).

For example, when mild steel (such as SS400) is used as the substrate, it is desirable to perform surface preparation (example: preparation so that the arithmetic mean roughness (Ra) is about 30 to 75 µm) by, for example, polishing the surface of the substrate through, for example, grit blasting as necessary.

The substrate may be a substrate subjected to a pretreatment such as a washing treatment or a blasting treatment to remove, for example, rust, dirt, and a coating material (old coating film) attached to the substrate.

The substrate is not particularly limited, and can be used without limitation with respect to a substrate required to have anticorrosion property, but from the viewpoint that, for example, the effect obtained by using the present composition is further exhibited, (iron and steel) structures such as ships, marine structures, plants, bridges, tanks, and containers are preferable.

The dry film thickness of the present coating film is not particularly limited, and is usually 10 to 500 µm and preferably 15 to 400 µm from the viewpoint that, for example, a coating film having sufficient anticorrosion property is obtained.

The substrate with the present coating film is a laminate including the present coating film and a substrate, and may have an underlying coating film (primer coating film) for the purpose of improving adhesion to the substrate and anticorrosion property, an intermediate coating film for the purpose of improving anticorrosion property, and a top coating film for the purpose of, for example, weather resistance and good appearance.

Specifically, when the present composition is used as a substitute for a zinc primer, an intermediate coating film and/or a top coating film may be formed on the present coating film.

Examples of the underlying coating film include coating films formed from various primer compositions such as epoxy resin-based primer compositions. Examples of the intermediate coating film include coating films formed from various intermediate coating compositions such as (meth)acrylic resin-based, epoxy resin-based, and urethane resin-based compositions. Examples of the top coating film include coating films formed from various top coating compositions such as (meth)acrylic resin-based, (meth)acrylic silicone resin-based, urethane resin-based, silicone resin-based, and fluororesin-based compositions. The underlying coating film, the intermediate coating film, and the top coating film may be formed by the present composition by changing, for example, the composition of the present composition.

### <<Method for Producing Substrate with Anticorrosive Coating Film>>

A method for producing a substrate with an anticorrosive coating film according to an embodiment of the present invention includes the following steps I and II:
a step I: a step of applying the present composition obtained using the present kit or the present composition produced by the present method to a substrate; and
a step II: a step of drying the present composition applied onto the substrate to form the present coating film.

### <Step I>

The coating application method in the step I is not particularly limited, and examples thereof include conventionally known methods such as spray coating application, for example, airless spray coating application or air spray coating application, brush coating application, and roller coating application. Among them, spray coating application is preferable from the viewpoint that, for example, the effect of the present invention is further exhibited, and a large-area substrate such as the above structure can be easily coated.

The conditions of the spray coating application may be appropriately adjusted according to the dry film thickness to be formed, and for example, in the case of airless spray coating application, primary (air) pressure: about 0.3 to 0.6 MPa, secondary (coating material) pressure: about 10 to 15 MPa, and gun moving speed: about 50 to 120 cm/sec are preferable.

The coating application is preferably performed such that the dry film thickness of the present coating film to be formed in the step II falls in the above range. In this case, the present coating film having a desired film thickness may be formed by one coating application (applying once), or the present coating film having a desired film thickness may be formed by two or more coating applications (applying twice or more).

Note that the term "two coating applications" means that the steps I and II are performed, and then, for example, the step I is performed on the coating film obtained in the step II.

When the present composition is applied onto the substrate, from the viewpoint of, for example, removing, for example, rust, oil and fat, moisture, dust, and salt on the substrate and improving the adhesion of the resulting coating film to the substrate, as necessary, the surface of the substrate is preferably subjected to, for example, a treatment (for example, a blasting treatment (ISO8501-1 Sa2 1/2) or a treatment for removing oil and dust by degreasing). The substrate may be coated with, for instance, a shop primer for the purpose of primary rust prevention.

### <Step II>

The drying conditions in the step II are not particularly limited, and may be appropriately set according to, for example, the method for forming a coating film, the type of the substrate, the use, and the coating application environment, but the drying temperature is usually 5 to 35°C in the case of normal temperature drying, and is usually 30°C or higher and lower than 100°C, and more preferably 40 to 80°C in the case of forced drying with, for example, a hot air dryer. According to the present composition, the composition can be dried and cured even by such normal temperature drying.

The drying time varies depending on the method for drying the coating film, and is, for example, about 1 day to 7 days in the case of normal temperature drying, and is, for example, about 5 minutes to 60 minutes in the case of forced drying.

### Examples

Hereinafter, an embodiment of the present invention will be further described with reference to Examples; however, the present invention is not limited thereto.

### [Example 1]

### <First Agent>

16 parts by mass of the non-aqueous epoxy compound A-1, 5 parts by mass of the non-aqueous epoxy compound A-3, 2 parts by mass of a reactive diluent, 2 parts by mass of a hydrocarbon resin, 1 part by mass of a silane coupling agent, 2 parts by mass of an organic solvent, and 0.1 parts by mass of the antifoaming agent-1 were dispersed at room temperature (23°C) for 30 minutes using a high-speed disperser to prepare a first agent.

### <Second Agent>

12.59 parts by mass of deionized water, 1.5 parts by mass of a dispersant, 0.1 parts by mass of the antifoaming agent-2, 15 parts by mass of potash feldspar, 10 parts by mass of talc, 10 parts by mass of precipitated barium sulfate, 5 parts by mass of titanium white, and 0.01 parts by mass of carbon were put in a container and stirred at room temperature (23°C) until the particle size reached 60 µm or less using a high-speed disperser, thereby preparing a pigment dispersion.

Next, 4 parts by mass of deionized water, 5 parts by mass of the water-dilutable amine compound B-1, 1.2 parts by mass of polyvalent carboxylic acid, 4 parts by mass of the non-aqueous amine compound C-1, and 2 parts by mass of the non-aqueous amine compound C-2 were put in another container and stirred for 30 minutes using a high-speed disperser, thereby preparing an amine dispersion.

Thereafter, the prepared amine dispersion and the pigment dispersion were mixed, 1.5 parts by mass of the viscosity adjusting agent-1 was added thereto, and the mixture was stirred until the temperature reached 45 to 50°C using a high-speed disperser, thereby preparing a second agent.

Table 3 shows the description of each component described in Table 1.

### [Examples 2 to 17 and Comparative Examples 1 to 8]

An anticorrosive coating composition was prepared in the same manner as in Example 1 except that the components shown in Table 1 or 2 were used in the amounts (numerical value, parts by mass) shown in Table 1 or 2.

Note that the amount of water shown in Table 1 or 2 is the total amount used for the preparation of the pigment dispersion and the amine dispersion, but the amount of deionized water used in the preparation of the amine dispersion is 4 parts by mass in all examples. That is, the amount of water used in the preparation of the pigment dispersion is an amount obtained by subtracting 4 parts by mass from the amount of water shown in Table 1 or 2.

### [Table 1]

**Table 1**

| | | Example | | | | | | | |
|---|---|---|---|---|---|---|---|---|---|
| | | 1 | 2 | 3 | 4 | 5 | 6 | 7 | 8 |
| First agent | Non-aqueous epoxy compound A-1 | 16 | 16 | 16 | 16 | 16 | 18 | | 16 |
| | Non-aqueous epoxy compound A-2 | | | | | | | 17.5 | |
| | Non-aqueous epoxy compound A-3 | 5 | 5 | 5 | 5 | 5 | | 5 | 5 |
| | Reactive diluent | 2 | 2 | 2 | 2 | 2 | 2 | 2 | 2 |
| | Hydrocarbon resin | 2 | 2 | 2 | 2 | 2 | 2 | 2 | 2 |
| | Potash feldspar | | | | | | | | |
| | Talc | | | | | | | | |
| | Precipitated barium sulfate | | | | | | | | |
| | Titanium white | | | | | | | | |
| | Carbon | | | | | | | | |
| | Silane coupling agent | 1 | 1 | 1 | 1 | 1 | 1 | 1 | 1 |
| | Organic solvent | 2 | 2 | 2 | 2 | 2 | 2 | 2 | 2 |
| | Antifoaming agent-1 | 0.1 | 0.1 | 0.1 | 0.1 | 0.1 | 0.1 | 0.1 | 0.1 |
| | Viscosity adjusting agent-1 | | | | | | | | |
| | Subtotal | 28.1 | 28.1 | 28.1 | 28.1 | 28.1 | 25.1 | 29.6 | 28.1 |
| Second agent | Water | 16.59 | 16.09 | 16.09 | 15.09 | 13.09 | 19.59 | 15.09 | 15.09 |
| | Dispersant | 1.5 | 1.5 | 1.5 | 1.5 | 1.5 | 1.5 | 1.5 | 1.5 |
| | Flash rust inhibitor | | | | | | | | |
| | Antifoaming agent-2 | 0.1 | 0.1 | 0.1 | 0.1 | 0.1 | 0.1 | 0.1 | 0.1 |
| | Potash feldspar | 15 | 15 | 15 | 15 | 15 | 15 | 15 | 15 |
| | Talc | 10 | 10 | 10 | 10 | 10 | 10 | 10 | 10 |
| | Mica | | | | | | | | |
| | Precipitated barium sulfate | 10 | 10 | 10 | 10 | 10 | 10 | 10 | 10 |
| | Titanium white | 5 | 5 | 5 | 5 | 5 | 5 | 5 | 5 |
| | Carbon | 0.01 | 0.01 | 0.01 | 0.01 | 0.01 | 0.01 | 0.01 | 0.01 |
| | Water-dilutable amine compound B-1 | 5 | 5 | 5 | 5 | 5 | 5 | 5 | 5 |
| | Water-dilutable amine compound B-2 | | | | | | | | |
| | Polyvalent carboxylic acid | 1.2 | 1.2 | 1.2 | 1.2 | 1.2 | 1.2 | 1.2 | 1.2 |
| | Non-aqueous amine compound C-1 | 4 | 4 | 4 | 4 | 4 | 4 | 4 | 4 |
| | Non-aqueous amine compound C-2 | 2 | 2 | 2 | 2 | 2 | 2 | 2 | |
| | Non-aqueous amine compound C-3 | | | | | | | | 3.5 |
| | Non-aqueous amine compound C-4 | | | | | | | | |
| | Non-aqueous amine compound C-5 | | | | | | | | |
| | Non-aqueous amine compound C-6 | | | | | | | | |
| | Viscosity adjusting agent-1 | 1.5 | | | | 5 | 1.5 | 1.5 | 1.5 |
| | Viscosity adjusting agent-2 | | 2 | | | | | | |
| | Viscosity adjusting agent-3 | | | 2 | | | | | |
| | Viscosity adjusting agent-4 | | | | 3 | | | | |
| | Subtotal | 71.9 | 71.9 | 71.9 | 71.9 | 71.9 | 74.9 | 70.4 | 71.9 |
| Total | | 100.0 | 100.0 | 100.0 | 100.0 | 100.0 | 100.0 | 100.0 | 100.0 |
| Property value | Solid content (mass%) of composition | 77 | 76 | 76 | 77 | 81 | 74 | 79 | 77 |
| | Reaction rate | 0.7 | 0.7 | 0.7 | 0.7 | 0.7 | 0.7 | 0.7 | 0.7 |
| | PVC (%) of composition | 32 | 30 | 30 | 29 | 36 | 33 | 31 | 32 |
| | PVC (%) of second agent | 56.4 | 59.2 | 58.9 | 56.9 | 49.1 | 56.4 | 56.4 | 57.7 |

**Table 1 (continued)**

| | | Example | | | | | | | | |
|---|---|---|---|---|---|---|---|---|---|---|
| | | 9 | 10 | 11 | 12 | 13 | 14 | 15 | 16 | 17 |
| First agent | Non-aqueous epoxy compound A-1 | 16 | 16 | 16 | 16 | 16 | 14.5 | | 15.2 | 11.8 |
| | Non-aqueous epoxy compound A-2 | | | | | | | 14.5 | | 4.2 |
| | Non-aqueous epoxy compound A-3 | 5 | 5 | 5 | 5 | 5 | 2.5 | 2.5 | | |
| | Reactive diluent | 2 | 2 | 2 | 2 | 2 | 1.4 | | 0.4 | |
| | Hydrocarbon resin | 2 | 2 | 2 | 2 | 2 | 2.5 | 2.5 | 1 | 2 |
| | Potash feldspar | | | | 5 | | | | | |
| | Talc | | | | 5 | | | | | |
| | Precipitated barium sulfate | | | | 5 | | | | | |
| | Titanium white | | | | 2 | | | | | |
| | Carbon | | | | | | | | | |
| | Silane coupling agent | 1 | 1 | 1 | 1 | 1 | 2 | 3.5 | 4 | 3 |
| | Organic solvent | 2 | 2 | 2 | 2 | 2 | 2.1 | 2 | 0.4 | |
| | Antifoaming agent-1 | 0.1 | 0.1 | 0.1 | 0.1 | 0.1 | | | | |
| | Viscosity adjusting agent-1 | | | | 0.5 | | | | | |
| | Subtotal | 28.1 | 28.1 | 28.1 | 45.6 | 28.1 | 25 | 25 | 21 | 21 |
| Second agent | Water | 15.09 | 14.79 | 15.79 | 16.59 | 16.59 | 18.09 | 18.2 | 18.7 | 19.19 |
| | Dispersant | 1.5 | 1.5 | 1.5 | 1.5 | 1.5 | 0.5 | 0.8 | 0.5 | 0.8 |
| | Flash rust inhibitor | | | | | | 0.1 | 0.1 | 0.1 | 0.1 |
| | Antifoaming agent-2 | 0.1 | 0.1 | 0.1 | 0.1 | 0.1 | 0.1 | 0.1 | 0.1 | 0.1 |
| | Potash feldspar | 15 | 15 | 15 | 10 | 15 | 21.5 | 16.3 | 22.7 | 17.1 |
| | Talc | 10 | 10 | 10 | 5 | 10 | 10 | 12.2 | 10.5 | 12.9 |
| | Mica | | | | | | | 3.0 | | 3.2 |
| | Precipitated barium sulfate | 10 | 10 | 10 | 5 | 10 | 4.7 | 4.7 | 4.9 | 4.9 |
| | Titanium white | 5 | 5 | 5 | 3 | 5 | 6 | 6.0 | 6.3 | 6.3 |
| | Carbon | 0.01 | 0.01 | 0.01 | 0.01 | 0.01 | 0.01 | 0.01 | | 0.01 |
| | Water-dilutable amine compound B-1 | 5 | 5 | 5 | 5 | | 4.1 | 4.1 | 4.3 | 4.3 |
| | Water-dilutable amine compound B-2 | | | | | 5 | | | | |
| | Polyvalent carboxylic acid | 1.2 | 1.2 | 1.2 | 1.2 | 1.2 | 1.3 | 1.3 | 1.4 | 1.4 |
| | Non-aqueous amine compound C-1 | 4 | 4 | 4 | 4 | 4 | 5.2 | 5.2 | 5.5 | 5.5 |
| | Non-aqueous amine compound C-2 | | | | 2 | 2 | 1.5 | 1.5 | 1.6 | 1.6 |
| | Non-aqueous amine compound C-3 | | | | | | | | | |
| | Non-aqueous amine compound C-4 | 3.5 | | | | | | | | |
| | Non-aqueous amine compound C-5 | | 3.8 | | | | | | | |
| | Non-aqueous amine compound C-6 | | | 2.8 | | | | | | |
| | Viscosity adjusting agent-1 | 1.5 | 1.5 | 1.5 | 1 | 1.5 | 1.5 | 1.5 | 1.6 | 1.6 |
| | Viscosity adjusting agent-2 | | | | | | 0.4 | | 0.8 | |
| | Viscosity adjusting agent-3 | | | | | | | | | |
| | Viscosity adjusting agent-4 | | | | | | | | | |
| | Subtotal | 71.9 | 71.9 | 71.9 | 54.4 | 71.9 | 75.0 | 75.0 | 79.0 | 79.0 |
| Total | | 100.0 | 100.0 | 100.0 | 100.0 | 100.0 | 100.0 | 100.0 | 100.0 | 100.0 |
| Property value | Solid content (mass%) of composition | 79 | 78 | 77 | 77 | 77 | 76 | 76 | 76 | 77 |
| | Reaction rate | 0.7 | 0.7 | 0.7 | 0.7 | 0.7 | 0.7 | 0.8 | 0.7 | 0.8 |
| | PVC (%) of composition | 31 | 31 | 32 | 32 | 31 | 36 | 37 | 39 | 39 |
| | PVC (%) of second agent | 52.9 | 54.3 | 56.9 | 44.3 | 55.7 | 59.6 | 59.5 | 59.3 | 59.4 |

### [Table 2]

**Table 2**

| | | Comparative Example | | | | | | | |
|---|---|---|---|---|---|---|---|---|---|
| | | 1 | 2 | 3 | 4 | 5 | 6 | 7 | 8 |
| First agent | Non-aqueous epoxy compound A-1 | 16 | 16 | 16 | 16 | 16 | 16 | 16 | 16 |
| | Non-aqueous epoxy compound A-2 | | | | | | | | |
| | Non-aqueous epoxy compound A-3 | 5 | 5 | 5 | 5 | 5 | 5 | 5 | 5 |
| | Reactive diluent | 2 | 2 | 2 | 2 | 2 | 2 | 2 | 2 |
| | Hydrocarbon resin | 2 | 2 | 2 | 2 | 2 | 2 | 2 | 2 |
| | Potash feldspar | 15 | 15 | 15 | 15 | 15 | 15 | | |
| | Talc | 10 | 10 | 10 | 10 | 10 | 10 | | |
| | Precipitated barium sulfate | 10 | 10 | 10 | 10 | 10 | 10 | | |
| | Titanium white | 5 | 5 | 5 | 5 | 5 | 5 | | |
| | Carbon | 0.01 | 0.01 | 0.01 | 0.01 | 0.01 | 0.01 | | |
| | Silane coupling agent | 1 | 1 | 1 | 1 | 1 | 1 | 1 | 1 |
| | Organic solvent | 2 | 2 | 2 | 2 | 2 | 2 | 2 | 2 |
| | Antifoaming agent-1 | 0.1 | 0.1 | 0.1 | 0.1 | 0.1 | 0.1 | 0.1 | 0.1 |
| | Viscosity adjusting agent-1 | 1.5 | 1.5 | 1.5 | 1.5 | 1.5 | 1.5 | | |
| | Subtotal | 69.61 | 69.61 | 69.61 | 69.61 | 69.61 | 69.61 | 28.1 | 28.1 |
| Second agent | Water | 18.09 | 16.59 | 16.59 | 16.29 | 17.29 | 17.59 | 4.59 | 20.09 |
| | Dispersant | | | | | | | 1.5 | 1.5 |
| | Antifoaming agent-2 | 0.1 | 0.1 | 0.1 | 0.1 | 0.1 | 0.1 | 0.1 | 0.1 |
| | Potash feldspar | | | | | | | 15 | 15 |
| | Talc | | | | | | | 10 | 10 |
| | Precipitated barium sulfate | | | | | | | 10 | 10 |
| | Titanium white | | | | | | | 5 | 5 |
| | Carbon | | | | | | | 0.01 | 0.01 |
| | Water-dilutable amine compound B-1 | 5 | 5 | 5 | 5 | 5 | 5 | 23 | |
| | Water-dilutable amine compound B-2 | | | | | | | | |
| | Polyvalent carboxylic acid | 1.2 | 1.2 | 1.2 | 1.2 | 1.2 | 1.2 | 1.2 | 1.2 |
| | Non-aqueous amine compound C-1 | 4 | 4 | 4 | 4 | 4 | 4 | | 5 |
| | Non-aqueous amine compound C-2 | 2 | | | | | 2 | | 2.5 |
| | Non-aqueous amine compound C-3 | | 3.5 | | | | | | |
| | Non-aqueous amine compound C-4 | | | 3.5 | | | | | |
| | Non-aqueous amine compound C-5 | | | | 3.8 | | | | |
| | Non-aqueous amine compound C-6 | | | | | 2.8 | | | |
| | Viscosity adjusting agent-1 | | | | | | 0.5 | 1.5 | 1.5 |
| | Viscosity adjusting agent-2 | | | | | | | | |
| | Viscosity adjusting agent-3 | | | | | | | | |
| | Viscosity adjusting agent-4 | | | | | | | | |
| | Subtotal | 30.39 | 30.39 | 30.39 | 30.39 | 30.39 | 30.39 | 71.9 | 71.9 |
| Total | | 100.0 | 100.0 | 100.0 | 100.0 | 100.0 | 100.0 | 100.0 | 100.0 |
| Property value | Solid content (mass%) of composition | 76 | 76 | 78 | 78 | 76 | 77 | 82 | 76 |
| | Reaction rate | 0.7 | 0.7 | 0.7 | 0.7 | 0.7 | 0.7 | 0.7 | 0.7 |
| | PVC (%) of composition | 32 | 32 | 31 | 31 | 32 | 33 | 29 | 32 |
| | PVC (%) of second agent | 0.0 | 0.0 | 0.0 | 0.0 | 0.0 | 0.0 | 48.7 | 59.4 |

**[Table 3]**

| | |
|---|---|
| Non-aqueous epoxy compound A-1 | "ADEKA RESIN EP-4901": bisphenol F type epoxy resin (liquid), epoxy equivalent: 172.5, solid content: 100 mass% (manufactured by ADEKA Corporation) |
| Non-aqueous epoxy compound A-2 | "E-028": bisphenol A type epoxy resin (liquid), epoxy equivalent: 185, solid content: 100 mass% (manufactured by OHTAKE-MEISHIN CHEMICAL, CO., LTD.) |
| Non-aqueous epoxy compound A-3 | "EPICLON1050": bisphenol A type epoxy resin (solid), epoxy equivalent: 475, solid content: 100 mass% (manufactured by DIC Corporation) |
| Reactive diluent | "Cardolite 2513HP": alkylphenol glycidyl ether, epoxy equivalent: 413, solid content: 100 mass% (manufactured by Cardolite Corporation) |
| Hydrocarbon resin | "Hirenol PL-1000S": phenol-modified hydrocarbon resin, solid content: 100 mass% (manufactured by Kolon Industries, Inc.) |
| Potash feldspar | "Unispar PG-K10": potash feldspar (manufactured by Sibelco Malaysis Sdn Bhd) |
| Talc | "Talc F-2": talc (manufactured by FUKUOKA TALC CO., LTD.) |
| Mica | "Suzorite Mica 200HK": mica (manufactured by IMERYS) |
| Precipitated barium sulfate | "Barico 300W": barium sulfate (manufactured by HAKUSUI TECH) |
| Titanium white | "TITANE R-5N": titanium white (manufactured by SAKAI CHEMICAL INDUSTRY CO., LTD.) |
| Carbon | "MA-100": carbon black (manufactured by Mitsubishi Chemical Corporation) |
| Silane coupling agent | "KBM-403": silane coupling agent, epoxy equivalent: 236, solid content: 100 mass% (manufactured by Shin-Etsu Chemical Co., Ltd.) |
| Organic solvent | Methoxypropanol |
| Antifoaming agent-1 | "Spectrasyn 40": solid content: 100 mass% (manufactured by Exxonmobil Chemical Company) |
| Antifoaming agent-2 | "BYK-1770": solid content: 100 mass% (manufactured by BYK Japan K.K.) |
| Dispersant | "DISPERBYK-190": solid content: 40 mass% (manufactured by BYK Japan K.K.) |
| Flash rust inhibitor | Sodium nitrite |
| Water-dilutable amine compound B-1 | "Epilink 701": amine emulsion containing amine adduct with epoxy compound, active hydrogen equivalent of solid content: 165, solid content: 55 mass% (manufactured by Evonik) |
| Water-dilutable amine compound B-2 | "Cardolite NX-8401": phenalkamine emulsion, active hydrogen equivalent of solid content: 160, solid content: 55 mass% (manufactured by Cardolite Corporation) |
| Polyvalent carboxylic acid | Succinic acid |
| Non-aqueous amine compound C-1 | "Ancamide 2050": polyamide adduct, active hydrogen equivalent: 150, solid content: 100 mass% (manufactured by Evonik) |
| Non-aqueous amine compound C-2 | "MACM": 4,4'-methylenebis(2-methylcyclohexylamine), active hydrogen equivalent: 60, solid content: 100 mass% (manufactured by Jiangsu Qingquan Chemical Co., Ltd.) |
| Non-aqueous amine compound C-3 | "Ancamine 2280": alicyclic amine, active hydrogen equivalent: 110, solid content: 100 mass% (manufactured by Evonik) |
| Non-aqueous amine compound C-4 | "Ancamide 506": aliphatic polyamidoamine, active hydrogen equivalent: 105, solid content: 100 mass% (manufactured by Evonik) |
| Non-aqueous amine | "Ancamide 2353": aliphatic polyamidoamine, active hydrogen equivalent: 114, solid |
| compound C-5 | content: 100 mass% (manufactured by Evonik) |
| Non-aqueous amine compound C-6 | "Ancamide 2794": alicyclic amine, active hydrogen equivalent: 85, solid content: 100 mass% (manufactured by Evonik) |
| Viscosity adjusting agent-1 | "CRAYVALLAC OPTIMA": amide-based (manufactured by Arkema Coating Resins Co., Ltd.) |
| Viscosity adjusting agent-2 | "A-S-A TW-121": amide neutralizing salt-based, solid content: 20 mass% (manufactured by ITOH OIL CHEMICALS CO., LTD.) |
| Viscosity adjusting agent-3 | "A-S-A TW-124": amide neutralizing salt-based, solid content: 25 mass% (manufactured by ITOH OIL CHEMICALS CO., LTD.) |
| Viscosity adjusting agent-4 | "RHEOBYK-420": urea-based, solid content: 52 mass% (manufactured by BYK Japan K.K.) |

### <Storage Stability of Second Agent>

50 g of the second agent prepared in each of Examples and Comparative Examples was weighed immediately after preparation and placed in a 50 mL glass bottle, the state (presence or absence of separation, precipitation, and aggregates) of the second agent when stored at 23°C for 1 month was visually observed, and then the state of the second agent when stirred with a spatula was visually confirmed, and evaluated according to the following evaluation criteria. The results are shown in Table 4.

Note that it can be said that there is no problem in practical use as long as the evaluation of the storage stability of the second agent is 3 or more.

### (Evaluation Criteria)

5: Separation, sedimentation, and aggregates cannot be confirmed in the second agent after storage for 1 month.
4: Slight separation is observed in the second agent after storage for 1 month, but sedimentation and aggregates are not confirmed, and the second agent becomes easily uniform by stirring with a spatula.
3: Slight separation, sedimentation, and aggregates are confirmed in the second agent after storage for 1 month, but the second agent becomes easily uniform by stirring with a spatula.
2: Separation, sedimentation, and aggregates are confirmed in the second agent after storage for 1 month, and the second agent becomes uniform by stirring with a spatula, but it takes time to become uniform.
1: Separation, sedimentation, and aggregates are confirmed in the second agent after storage for 1 month, and the second agent does not become uniform even after stirring with a spatula.

### <Atomization Property>

The first agent and the second agent prepared in each of Examples and Comparative Examples were maintained at 23°C, the first agent and the second agent were mixed, and the viscosity was adjusted with deionized water so that the coating material viscosity at 23°C using a No. 1 rotor of Viscometer VT-04F (manufactured by RION Co., Ltd.) as a viscometer was 30 to 40 dPa·s.

Each anticorrosive coating composition immediately after viscosity adjustment (after 0 minute) with the adjusted viscosity, each anticorrosive coating composition after standing still at 23°C for 30 minutes from the time of viscosity adjustment, and each anticorrosive coating composition after standing still at 23°C for 1 hour from the time of viscosity adjustment were ejected for 10 seconds using an airless spray (compression ratio: 30 : 1, primary pressure: 0.4 to 0.5 MPa, hose length: 10 m, tip size: 519, manufactured by Graco Inc.), and the atomization property (spray pattern) of each anticorrosive coating composition was visually evaluated according to the following evaluation criteria. The results are shown in Table 4.

Note that it can be said that there is no problem in practical use as long as the evaluation of the atomization property is 4 or more.

### (Evaluation Criteria)

5: When the anticorrosive coating composition is applied to a substrate using an airless spray, the anticorrosive coating composition is sprayed in the form of a mist as fine particles, and the formed spray pattern is a uniform pattern without generation of fingerings or tailings.
4: When the anticorrosive coating composition is applied to a substrate using an airless spray, the anticorrosive coating composition is sprayed in the form of a mist as fine particles, and the formed spray pattern spreads without generation of fingerings but has a slight tailing.
3: When the anticorrosive coating composition is applied to a substrate using an airless spray, the anticorrosive coating composition is sprayed in the form of a mist as fine particles, and the formed spray pattern spreads, but fingerings are observed, and tailings are also observed.
2: When the anticorrosive coating composition is applied to a substrate using an airless spray, the anticorrosive coating composition is sprayed in the form of a mist as fine particles, but the formed spray pattern has a narrow width, and fingerings and tailings are also observed.
1: When the anticorrosive coating composition is applied to a substrate using an airless spray, the anticorrosive coating composition is not sprayed in the form of a mist as fine particles, and the spray pattern does not spread at all, so that coating application is impossible.

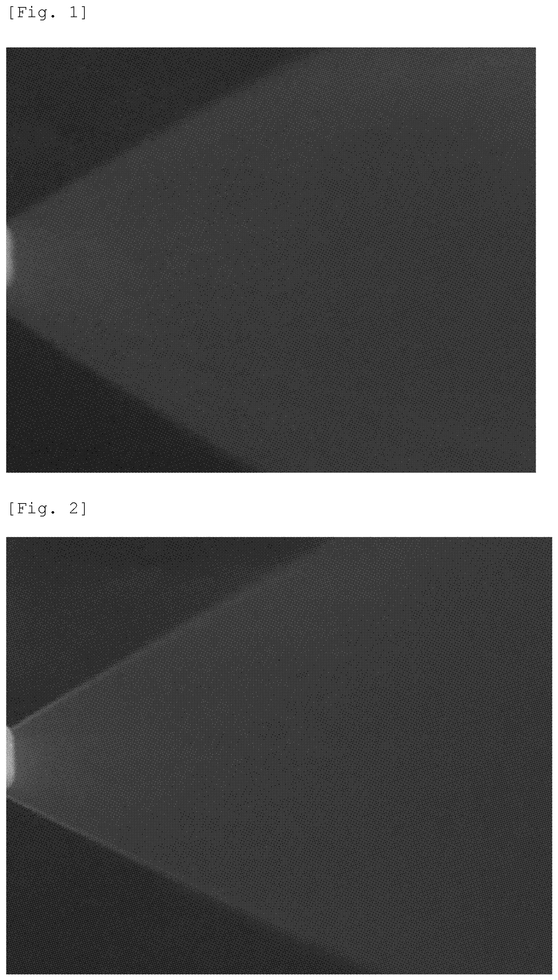

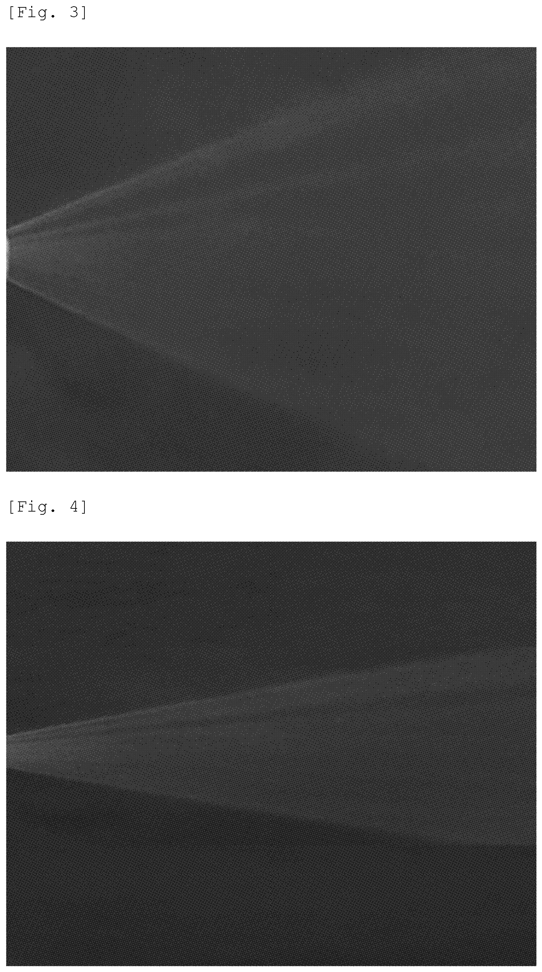

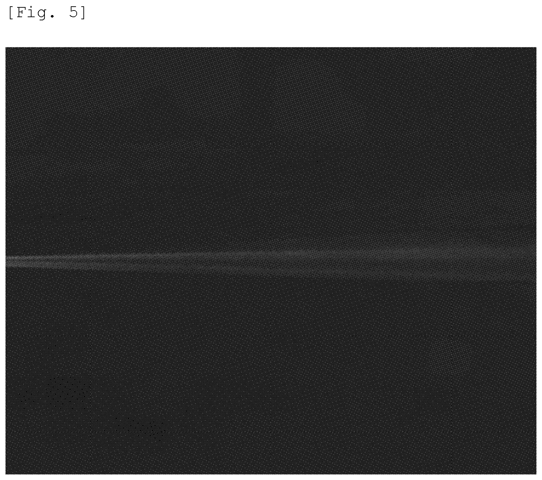

Photographs of spray states during spray coating application corresponding to the evaluation criteria 5 to 1 are shown in Figs. 1 to 5.

Note that the "tailing" is a phenomenon in which a thick line is generated at both ends of the spray pattern, and the "fingering" is a phenomenon in which a thick line is generated due to unevenness of the spread in the spray pattern.

### [Preparation of Substrate with Anticorrosive Coating Film (Test Plate)]

An SS400 sandblasted steel plate (arithmetic mean roughness (Ra): 30 to 75 µm) with a dimension of 150 mm × 70 mm × 1.6 mm (thickness) was prepared. The anticorrosive coating composition obtained by mixing the first agent and the second agent which were prepared as described above was applied to the surface of the steel plate using an air spray, so that the dry film thickness was 150 µm. Then, the anticorrosive coating composition applied onto the steel plate was dried at 23°C for 7 days to prepare a test plate.

Note that, in the anticorrosive coating composition obtained in Comparative Example 8, the first agent and the second agent could not be uniformly mixed, a coating film could not be formed by an air spray, and the following test of anticorrosion property (salt spray) and anticorrosion property (high temperature and high humidity) could not be performed.

### <Anticorrosion Property (Salt Spray)>

In accordance with JIS K 5600-7-1:1999, a salt spray test was performed by holding the test plate in a salt spray tester for 1 month or 3 months under salt spray conditions of a salt water concentration of 5 mass%, a temperature of 35°C, and a relative humidity of 98%, and the anticorrosion property (salt spray) was evaluated according to the following evaluation criteria. The results are shown in Table 4.

Note that it can be said that there is no problem in practical use as long as the evaluation of the anticorrosion property (salt spray) is 4 or more.

### (Evaluation Criteria)

5: No rust or blistering occurred.
4: No blistering occurred, but the area of occurrence of rust on the surface of the substrate under the coating film was less than 0.03% with respect to the entire surface of the substrate under the coating film.
3: An extremely small amount of small blistering occurred, and the area of occurrence of rust on the surface of the substrate under the coating film was 0.03% or more and less than 0.1% with respect to the entire surface of the substrate under the coating film.
2: Blistering occurred, and the area of occurrence of rust on the surface of the substrate under the coating film was 0.1% or more and less than 0.3% with respect to the entire surface of the substrate under the coating film.
1: Blistering occurred, and the area of occurrence of rust on the surface of the substrate under the coating film was 0.3% or more with respect to the entire surface of the substrate under the coating film.

### <Anticorrosion Property (High Temperature and High Humidity)>

In accordance with JIS K 5600-7-1:1999, the appearance of the test plate after holding the test plate in a high temperature and high humidity tester having a temperature of 50 ± 1°C and a humidity of 95% or more for 1 month or 3 months was visually evaluated according to the following criteria. The results are shown in Table 4.

Note that it can be said that there is no problem in practical use as long as the evaluation of the anticorrosion property (high temperature and high humidity) is 2 or more.

### (Evaluation Criteria)

3: There are no changes in blistering, cracking, rust, peeling, and hue.
2: Slight defects (changes) are observed in any of blistering, cracking, rust, peeling, and hue.
1: Obvious defects (changes) are observed in any of blistering, cracking, rust, peeling, and hue.

### [Table 4]

**Table 4**

| | | Example | | | | | | | | | | | | | | | | |
|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 |
| Storage stability of second agent | | 5 | 5 | 5 | 5 | 5 | 5 | 5 | 5 | 5 | 5 | 5 | 5 | 5 | 5 | 5 | 5 | 5 |
| Atomization property | 0 min | 5 | 5 | 5 | 5 | 5 | 5 | 5 | 5 | 5 | 5 | 5 | 5 | 5 | 5 | 5 | 5 | 5 |
| | 30 min | 5 | 5 | 5 | 5 | 5 | 5 | 4 | 5 | 5 | 5 | 5 | 5 | 5 | 5 | 5 | 5 | 5 |
| | 1 hr | 4 | 4 | 4 | 4 | 4 | 5 | 4 | 4 | 5 | 4 | 4 | 4 | 4 | 4 | 4 | 4 | 4 |
| Anticorrosion property (salt spray) | 1 month | 5 | 5 | 5 | 5 | 5 | 5 | 5 | 5 | 5 | 5 | 5 | 5 | 5 | 5 | 5 | 5 | 5 |
| | 3 months | 5 | 5 | 5 | 5 | 5 | 5 | 5 | 5 | 4 | 5 | 5 | 5 | 5 | 5 | 5 | 5 | 5 |
| Anticorrosion property (high temperature and high humidity) | 1 month | 3 | 3 | 3 | 3 | 3 | 3 | 3 | 3 | 3 | 3 | 3 | 3 | 3 | 3 | 3 | 3 | 3 |
| | 3 months | 2 | 2 | 2 | 2 | 2 | 2 | 2 | 3 | 2 | 2 | 2 | 2 | 2 | 2 | 2 | 2 | 2 |

**Table 4 (continued)**

| | | Comparative Example | | | | | | | |
|---|---|---|---|---|---|---|---|---|---|
| | | 1 | 2 | 3 | 4 | 5 | 6 | 7 | 8 |
| Storage stability of second agent | | 2 | 2 | 2 | 2 | 2 | 2 | 5 | 2 |
| Atomization property | 0 min | 5 | 5 | 5 | 5 | 5 | 5 | 5 | 1 |
| | 30 min | 3 | 3 | 3 | 3 | 3 | 3 | 5 | - |
| | 1 hr | 2 | 2 | 3 | 2 | 2 | 2 | 4 | - |
| Anticorrosion property (salt spray) | 1 month | 5 | 5 | 5 | 5 | 5 | 5 | 3 | - |
| | 3 months | 5 | 5 | 4 | 5 | 5 | 5 | 2 | - |
| Anticorrosion property (high temperature and high humidity) | 1 month | 3 | 3 | 3 | 3 | 3 | 3 | 1 | - |
| | 3 months | 2 | 3 | 2 | 2 | 2 | 2 | 1 | - |

## Claims

1. An anticorrosive coating composition kit comprising:
a first agent comprising a non-aqueous epoxy compound (A); and
a second agent comprising an amine compound-containing water-dilutable component (B), an amine compound-containing non-aqueous component (C), a pigment (D), and water.

2. The kit according to claim 1, wherein the second agent comprises a viscosity adjusting agent.

3. The kit according to claim 1, wherein the second agent comprises a divalent or higher polyvalent carboxylic acid.

4. The kit according to claim 1, wherein a content of water in the second agent is 10 to 50 mass%.

5. The kit according to claim 1, wherein a pigment volume concentration (PVC) of the second agent is 35 to 75%.

6. A method for producing an anticorrosive coating composition, the method comprising:
a step 1 of preparing a first agent using a non-aqueous epoxy compound (A);
a step 2 of preparing a second agent comprising water using an amine compound-containing water-dilutable component (B), an amine compound-containing non-aqueous component (C), and a pigment (D); and
a step 3 of mixing the first agent and the second agent.

7. An anticorrosive coating film formed using the kit according to any one of claims 1 to 5.

8. A substrate with an anticorrosive coating film, comprising a substrate and the anticorrosive coating film according to claim 7.

9. A method for producing a substrate with an anticorrosive coating film, the method comprising the following steps I and II:
a step I: a step of applying an anticorrosive coating composition obtained using the kit according to any one of claims 1 to 5 to a substrate; and
a step II: a step of drying the anticorrosive coating composition applied onto the substrate to form an anticorrosive coating film.

10. The method for producing a substrate with an anticorrosive coating film according to claim 9, wherein applying in the step I is spray coating application.
